# EUROPEAN PATENT APPLICATION

(11) **EP 2 475 181 A1**
(43) Date of publication of application: **11.07.2012**
(21) Application number: 10811432.3
(22) Date of filing: 08.07.2010
(51) Int. Cl.: H04N 13/04, G11B 20/10, G11B 27/00, H04N 5/92, H04N 7/173, H04N 7/26

(54) **STEREOSCOPIC VISION CONTROL DEVICE, INTEGRATED CIRCUIT, STEREOSCOPIC VISION CONTROL METHOD**

(30) Priority: 31.08.2009 JP 2009199655
(71) Applicant: Panasonic Corporation, Kadoma-shi Osaka 571-8501 (JP)
(72) Inventor: YOSHIHO, Gotoh, Osaka 540-6207 (JP); MASAYUKI, Kozuka, Osaka 540-6207 (JP); HIROSHI, Yahata, Osaka 540-6207 (JP)
(74) Representative: Grünecker, Kinkeldey, Stockmair & Schwanhäusser
(86) International application number: PCT/JP2010/004455
(87) International publication number: WO 2011/024373

(57) **Abstract**

A parallax information detection unit detects parallax information based on a motion vector obtained resulting from motion compensation on a 3D video performed by a decoder, and converts the detected parallax information into a stereoscopic effect level. Then, a control unit compares the stereoscopic effect level with a lock level recorded in a lock level register, and performs stereoscopic display effect control based on a result of the comparison.

## Description

### [Technical Field]

The present invention relates to a stereoscopic display control device that causes a viewer to view a stereoscopic video, and particularly relates to an art for protecting infant and elder viewers against a stereoscopic display effect.

### [Background Art]

Recently, there have been actively performed developments and researches of an art for playing back stereoscopic videos using a parallax between eyes. According to this art, since a viewer perceives a stereoscopic video due to a difference between a video entered a left eye and a video entered a right eye, a video with a parallax between the left and right eyes is separately entered the left and right eyes so as to cause the viewer to feel the depth of the video. The degree of pop-out of the video varies depends on the degree of the parallax. In other words, the higher the parallax is, the higher the degree of pop-out of the video is. The lower the parallax is, the lower the degree of pop-out of the video is. A creator of a stereoscopic video can change the degree of pop-out of a video by adjusting a parallax of a video to be viewed between left and right eyes thereby to realize stereoscopic display to a viewer. For example, by setting the degree of the parallax high so as to heighten the degree of pop-out of the video, it is possible to cause the viewer to have a strong surprise feeling.

### [Citation List]

### [Patent Literature]

[Patent literature 1] WO97/07510

### [Summary of Invention]

### [Technical Problem]

In the case where a video has a high degree of pop-out, it is possible to cause a viewer to have a strong surprise feeling. However, younger and elder viewers might extremely become surprised or scared at such a video having a high degree of pop-out. Accordingly, there is a case where a person having a parental authority of such younger and elder viewers might hope to impose a viewing restriction of a video having a high degree of pop-out on the viewers.

Especially, an infant cannot distinguish between a virtual world and a real world, and is psychologically immature. A person having a parental authority of such an infant worries about whether viewing of a video having a high degree of pop-out might have some effect on the infant.

Also, the larger a screen of a display device to be viewed is, the higher the degree of pop-out of an object is. For example, there is a case where a viewer feels as if an object on the screen were at an extremely close to the viewer. Even an adult viewer becomes surprised at such a stereoscopic display effect. Accordingly, it is conceivable that a person having a parental authority of an infant viewer for example hopes to avoid viewing of a stereoscopic video by the infant viewer without permission while the person is not around the infant viewer.

In view of this, there has been proposed an idea of applying the parental lock disclosed in the Patent Literature 1 to a stereoscopic video. The parental lock is an art for regulating playback of an extreme video based on a level setting determined in a device. This level setting is based on the ethical standards called "rating system" determined for each country.

However, a conventional parental lock is based on the assumption that level setting is performed only after a video content is checked by a rating committee such as the EIRIN (Film Classification and Rating Committee) of Japan. Since the degree of pop-out of a video is not rated by such a rating committee, it is impossible to apply the above idea of parental lock without modification.

Here, it is conceivable to make the degree of pop-out of a video a rating target of a rating committee such as the EIRIN. However, this requires development of a relevant legal system, and the development cannot keep up with the rapid popularization of 3D movie works.

In view of this, the present invention aims to provide a stereoscopic display control device capable of effectively protecting infant and elder viewers against a stereoscopic display effect with no dependence on video rating performed by a rating committee such as the EIRIN.

### [Solution to Problem]

In order to solve the above problem, the present invention provides a stereoscopic control device that acquires a pair of main-view data and sub-view data and outputs the acquired pair to another device so as to cause a viewer to view a stereoscopic image, the stereoscopic control device comprising: a detection unit operable to detect parallax information that indicates a distance between a pixel of the main-view data and a pixel of the sub-view data; a reception unit operable to receive, from a user, an operation of setting and/or changing a lock level that indicates a permissible degree of pop-out of the stereoscopic image set by the user; an authentication unit operable to, when the reception unit receives the operation from the user, perform authentication on the user; a holding unit operable to, when the authentication unit succeeds in the authentication, hold therein the set or changed lock level; and a control unit operable to (i) compare the lock level with a stereoscopic effect level that indicates a degree of a stereoscopic effect produced by the parallax information, and (ii) when a result of the comparison shows that the stereoscopic effect level is higher than the lock level, restrict the stereoscopic effect.

### [Advantageous Effects of Invention]

The control unit compares a stereoscopic effect level caused by a distance formed by pixels of main-view data and sub-view data with a lock level set or changed through user authentication. When the stereoscopic effect level is higher than the lock level, the control unit performs stereoscopic effect restriction. This can limit viewing of a stereoscopic video having a high pop-out effect to only adult viewers.

The distance formed by pixels of main-view data and sub-view data is automatically detected through software processing. The user can adjust the degree of pop-out of a 3D video by performing a simple operation such as setting or changing of the lock level to be compared with the parallax. Restriction on stereoscopic playback described above does not require the video rating by a rating committee such as the EIRIN of Japan. Accordingly, adjustment of the degree of pop-out of a 3D video does not require the development of rating systems.

Video manufacturers can be proactive in promoting popularization of sane stereoscopic contents. This highly contributes to the industry.

Information of a motion vector extracted in decoding of data compliant with the MVC (Multi-view Video Coding) standards is used for calculating parallax information so as to perform level conversion. Accordingly, it is possible to keep to the minimum the increase in loading on the playback device due to the level conversion.

### [Brief Description of Drawings]

FIG. 1 shows the whole structure of a system relating to an Embodiment 1.
FIG. 2A shows pop-out stereoscopic display, and FIG. 2B shows receding stereoscopic display.
FIG. 3A shows a correspondence among a distance (3H-a) from a convergence point to a mapping point on a screen, and an intermediate value E/2 of an interpupil distance, and a convergence angle α/2, and FIG. 3B shows a correspondence among a distance (3H-a) from a convergence point to a mapping point on the screen, an intermediate value of E/2 of an interpupil distance, and a convergence angle β/2.
FIG. 4 shows a file structure of a recording medium.
FIG. 5 shows playlist information, a base-view video stream, a dependent-view video stream, and stream file playlist information in correspondence with one another.
FIG. 6 shows picture numbers, picture types, and reference pictures of base-view components and dependent-view components.
FIG. 7 shows picture numbers, picture types, and reference pictures of the base-view components and the dependent-view components shown in FIG. 6.
FIG. 8A shows structures of the base-view component and the dependent-view component, FIG. 8B shows an internal structure of a slice, and FIG. 8C shows a structure of a macroblock.
FIG. 9 shows an example of the structure of a playback device 10 relating to the Embodiment 1.
FIG. 10 shows a correspondence relationship between stereoscopic effect level and lock level.
FIG. 11 shows a correspondence relationship among stereoscopic effect level, parallax angle, and parallax in a tabular format.
FIG. 12 shows the range of the number of pixels that constitute a distance Δa in the case where a display device 20 is a 50-inch TV monitor (1106 mm in width and 622 mm in height) whose number of pixels is 1920 × 1080.
FIG. 13A shows a password input screen displayed for lock level selection, and FIG 13B shows a lock level selection screen.
FIG. 14 shows the distance Δa on a display surface in an x-y coordinate system of the base-view component and the dependent-view component.
FIG. 15 shows a base-view component to which an MB (x0,y0) belongs and a dependent-view component to which an MB (x1,y1) belongs.
FIG. 16 is a flow chart showing a procedure of decoding processing performed by the playback device 10 relating to the Embodiment 1.
FIG. 17 is a flow chart showing parallax information detection processing relating to the Embodiment 1.
FIG. 18 is a flow chart showing processing of changing lock level.
FIG. 19 is a block diagram showing an example of the structure of the playback device 200 relating to an Embodiment 2.
FIG. 20 shows a parallax detected by the display device 200.
FIG. 21 is a flow chart showing operations of the display device 200 relating to the Embodiment 2.
FIG. 22 is a flow chart showing operations of parallax information detection processing (Step S203) relating to the Embodiment 2.
FIG. 23A shows the whole structure of a system relating to an Embodiment 3, FIG. 23B shows shutter operations performed during viewing of a right-eye image, and FIG. 23C shows shutter operations performed during viewing of a left-eye image viewing.
FIG. 24 is a block diagram showing an example of a structure of 3D glasses 300 relating to an Embodiment 3.
FIG. 25 is a flow chart showing operations performed by the 3D glasses 300 relating to the Embodiment 3.
FIG. 26 shows normal shutter operations while a stereoscopic video is played back and shutter operations in the case where the playback mode is switched from 3D playback to 2D playback.
FIG. 27 shows a level conversion standard in the case where the stereoscopic effect level is divided into six stages (N=6).

### [Description of Embodiments]

The following describes embodiments for implementing the above stereoscopic display control device, with reference to the drawings.

### (Embodiment 1)

### 1.1 Outline

The present embodiment is an embodiment for implementing, as a stereoscopic display control device, a playback device to be used in pair with a display device. In other words, the stereoscopic display control device relating to the present embodiment reads a plurality of view components from a recording medium, and converts parallax information with respect to each of the read view components into a level. Then, the stereoscopic display control device compares the converted level with a permissible stereoscopic effect level that has been in advance set by a user, and performs stereoscopic display effect control based on a result of the comparison. Specifically, when the level into which the parallax information has been converted is higher than the permissible stereoscopic effect level, the stereoscopic display control device switches from 3D playback to 2D playback. When the converted level is equal to or lower than the permissible stereoscopic effect level, the stereoscopic display control device performs normal 3D playback. The following describes the Embodiment 1 with reference to the drawings.

### 1.2 Structure of System including Playback Device I

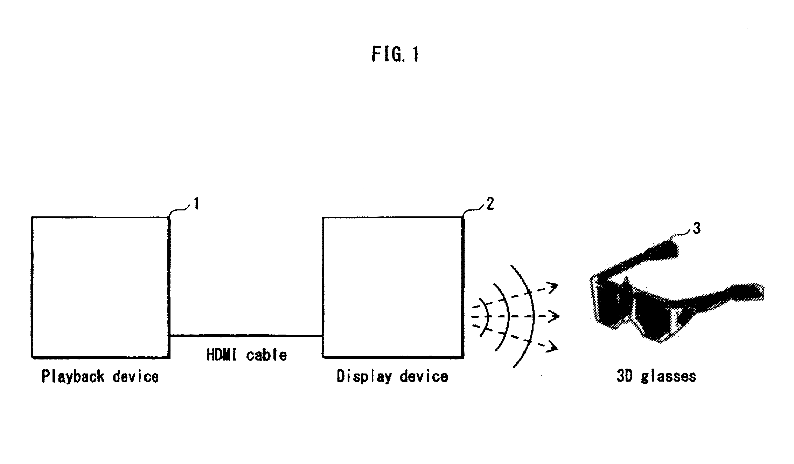

Firstly, the following describes a usage pattern of a playback device relating to the Embodiment 1. The playback device relating to the Embodiment 1 is used in a home theater system, for example. FIG. 1 shows a structure of a system that includes the playback device 1 relating to the Embodiment 1. As shown in FIG. 1, the system is composed of the playback device 1, a display device 2, and 3D glasses 3.

The playback device 1 decodes view video data, detects parallax information from the view video data, and converts the detected parallax information into a level. Then, the playback device 1 compares the level into which the parallax information has been converted with a stereoscopic effect level permitted by a user, and performs stereoscopic display effect control based on a result of the comparison. Here, view video data indicates compression-coded video data, and includes main-view data constituting a video viewed along a main sight line and sub-view data constituting a video viewed along a sub sight line.

The display device 2 displays an uncompressed picture obtained by the playback device decoding view video data. When playing back stereoscopic videos, the display device 2 alternately displays a right-eye image and a left-eye image. Here, the right-eye image and the left-eye image are an image for right eye and an image for left eye, respectively.

The 3D glasses 3 are so called active shutter 3D glasses, and alternately open and close right-eye and left-eye liquid crystal shutters in accordance with a timing signal sent from the display device 2 via infrared ray (IR). Specifically, when a right-eye image is displayed on the display device 2, the 3D glasses 3 open the right-eye liquid crystal shutter and close the left-eye liquid crystal shutter. When a left-eye image is displayed on the display device 2, the 3D glasses 3 open the left-eye liquid crystal shutter and close the right-eye liquid crystal shutter. This causes a viewer to view the right-eye image and the left-eye image with his right eye and left eye, respectively. As a result, stereoscopic display is realized.

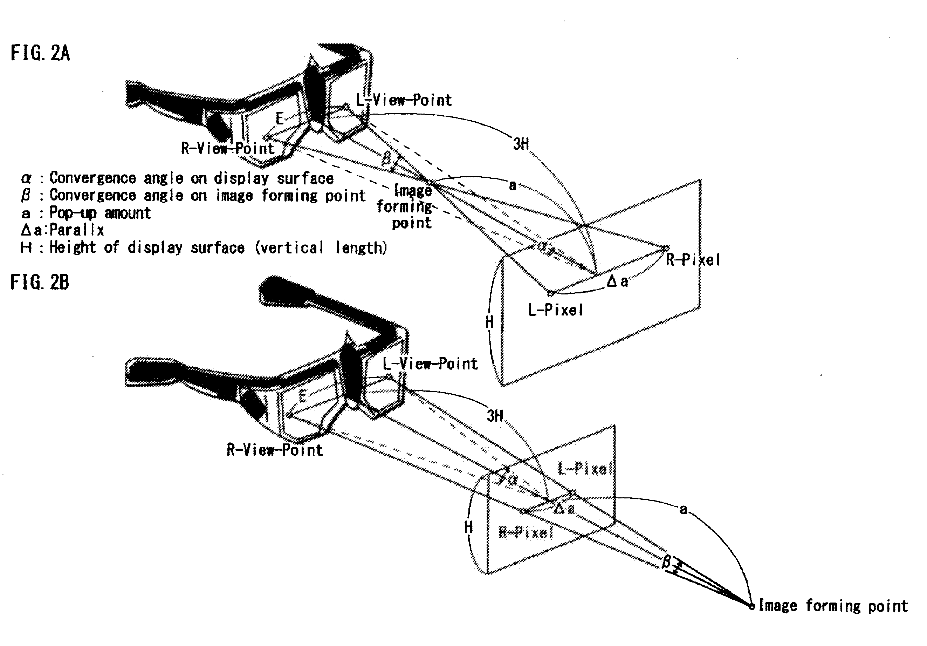

This completes the description of the usage pattern of the playback device I relating to Embodiment 1 in the home theater system. Next, the following describes stereoscopic display realized using the playback device 1, the display device 2, and the 3D glasses 3, with reference to FIG. 2.
1.3 Principle of Stereoscopic Display Here, stereoscopic display effect includes a pop-out effect and a receding effect. FIG. 2A shows stereoscopic display having the pop-out effect, and FIG. 2B shows stereoscopic display having the receding effect. Pop-out stereoscopic display provides an effect in which as if an object were popping up from a display surface. Receding stereoscopic display provides an effect in which as if an object were receding into the display surface.

In these figures, the sign "H" represents the height (vertical length) of the display surface, and the sign "E" represents the interpupil distance. Since the optimal viewing distance is generally three times the height of the display surface, the viewing distance is set as 3H. The sign "Δa" represents the distance between pixels of an image. When a right-eye pixel R-pixel and a left-eye pixel L-pixel are in a positional relation shown in FIG. 2A, "Δa" is set as a positive value. When the right-eye pixel R-pixel and the left-eye pixel L-pixel are in a positional relation shown in FIG. 2B, "Δa" is set as a negative value.

The lower right side in FIG. 2A shows a pair of a right-eye pixel R-pixel and a left-eye pixel L-pixel on the screen of the display device. The left side in FIG. 2A shows a right-eye pupil R-view-point and a left-eye pupil L-view-point of a viewer. The direct line connecting the left-eye pixel L-pixel and the left-eye pupil L-view-point is a sight line from the left-eye pupil L-view-point, and this sight line is realized by the 3D glasses switching between transmission of light and shading of light.

The direct line connecting the right-eye pixel R-pixel and the right-eye pupil R-view-point is a sight line from the right-eye pupil R-view-point, and this sight line is realized by the 3D glasses switching between transmission of light and shading of light. Here, the intersection point between the sight line from the right-eye pupil R-view-point and the sight line from the left-eye pupil L-view-point is the convergence point. When a stereoscopic image is played back, the viewer feels as if the pixels on the screen were positioned on this convergence point. The angle formed by the sight line from the right-eye pupil R-view-point and the sight line from the left-eye pupil L-view-point is referred to as a "convergence angle β".

In contrast, when a monoscopic image is played back, the intersection point between the sight line from the right-eye pupil R-view-point and the sight line from the left-eye pupil L-view-point is positioned on the screen of the display device. In FIG. 2A, a mapping point obtained by mapping the convergence point on the screen corresponds to the convergence point during monoscopic image playback. When the intersection point between the sight line from the right-eye pupil R-view-point and the sight line from the left-eye pupil L-view-point is positioned on the screen during monoscopic image playback, the sight line from the right-eye pupil R-view-point and the sight line from the lett-eye pupil L-view-point form a "convergence angle α". The difference "β-α" in convergence angle between stereoscopic playback and monoscopic playback is a parameter representing the level of stereoscopic display effect.

### 1.4 Method of Calculating Threshold Value

The following describes the specific number of pixels to be set as the threshold value for parallax, in the case where switching between stereoscopic playback and monoscopic playback is performed depending on whether an image to be played back has a stereoscopic effect level that is higher than the value determined by the Safety Guideline recommended by the 3D Consortium.

In the case where the height of the screen of the display device is represented as the sign "H", it is desirable that the viewer views the screen at the position 3H distant from the center of the screen. In the case where the display device is a 50-inch TV for example, the distance from the center of the screen to the viewer is calculated as 3H = 1860 mm. Also, in the case where the viewer is an adult, the interpupil distance E is calculated as 60 mm.

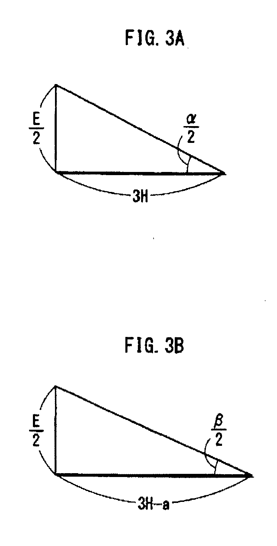

The angle α is formed by the mapping point of the convergence point, the sight line from the right-eye pupil R-view-point, and the sight line from the left-eye pupil L-view-point. Accordingly, values "En" and "3H-a" are each a side forming a triangle shown in FIG. 3A. The value E/2 is calculated by multiplying 3H by tan(α/2). As a result, in the case where the viewing distance is set as 3H, the intermediate value E/2 of the interpupil distance is calculated by an expression 3H×tan(α/2) = E/2. Modification of this expression results in an expression α/2 = tan-1 (E/(3H×2)).

Here, when 3H = 1860 mm and E = 60 mm are satisfied, α represented in units of "degree" is 1.848.

According to the Safety Guideline recommended by the 3D Consortium, it is defined that "β-α should be 40 arcminutes". The "arcminute" is a unit representing one sixtieth of one "degree". Accordingly, β-α is 40 arcminutes, it is desirable to switch from stereoscopic display effect to monoscopic display effect. The "convergence angle β" is the switching border between stereoscopic display effect and monoscopic display effect. By modifying an expression β-α = 40 arcminutes, an expression β = 40/60+α is satisfied. When the above convergence angle α is assigned to this expression, β = 2.515 is obtained.

When the distance (3H-a) from the convergence point to the mapping point on the screen and the intermediate value E/2 of the interpupil distance are used, the values E/2 and 3H-a are each a side forming a triangle shown in FIG. 3B, and E/2 is calculated by multiplying 3H-a by tan(β/2). As a result, β/2 is represented by an expression tan(β/2)=E/(2×(3H-a)).

By modifying the above expression, the distance a from the screen to the convergence point is calculated as an expression a = 6×tan(β/2)×H-E/2×tan(β/2). Here, when the specific value of tan(2.515), namely, 0.022 is assigned to the above expression, a = 6×0.02×620/2×0.022 = 491 mm is calculated.

Here, the ratio of a to 3H-a is equal to the ratio of Δa to the interpupil distance E, and accordingly an expression Δa:E = a:3H-a is satisfied. By modifying this expression, Δa = a×E/(3H-a) is satisfied. When the specific values of E, 3H, and a are assigned to this modified expression, Δa is calculated as 21.5 mm. By setting the threshold value for parallax between the pixels of the left-eye image and the pixels of the right-eye image on the screen as 21.5 mm, it is possible to realize switching of stereoscopic display effect with depending on whether β-α is higher than 40 arcminutes.

In the above calculation using the specific values, the threshold value for stereoscopic effect level is set as 40 arcminutes. Alternatively, in the present embodiment, it is possible to increase and decrease the threshold value depending on setting of the setup menu. The method of increasing and decreasing the threshold value is described later.

### 1.5 Structure of Recording Medium

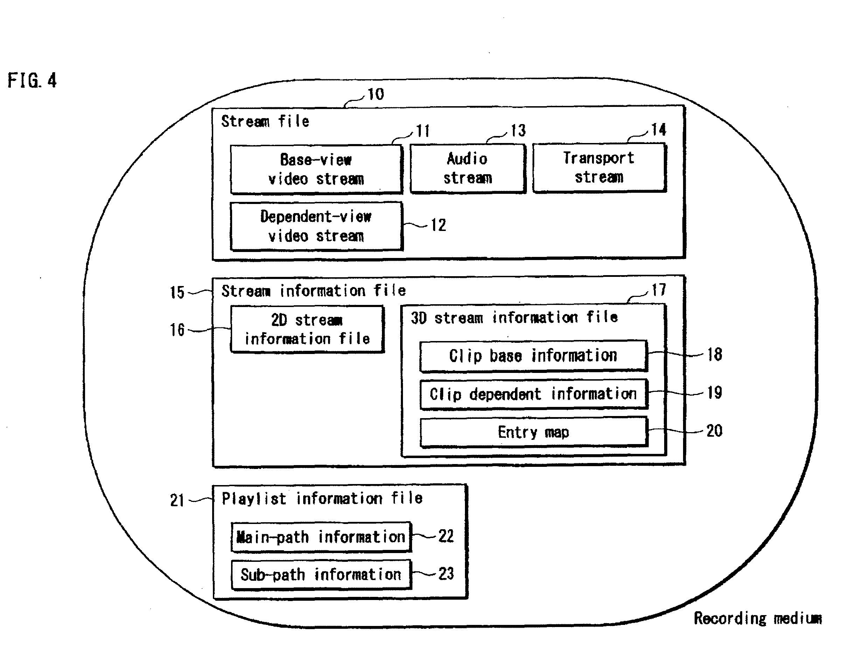

FIG. 4 shows a file structure of a recording medium. As shown in FIG. 4, the recording medium has recorded thereon a stream file, a stream information file, and a playlist information file, as follows.

### 1.5.1 Stream File 10

The stream file 10 has stored thereon a base-view video stream 11, a dependent-view video stream 12, at least one audio stream 13, and a transport stream 14 obtained by multiplexing a graphics stream. Stream files include a stream file exclusively for 2D and a stream file for both 2D and 3D. The stream file exclusively for 2D is in a normal transport stream format. The stream file for both 2D and 3D is in a stereoscopic interleaved stream file format. The stereoscopic interleaved stream file format is a file format in which divided portions, which are obtained by dividing a transport stream (main TS) including a base-view video stream, and divided portions, which are obtained by a transport stream (sub TS) including a dependent-view stream, are alternately arranged, and the arranged divided portions are recorded on a recording medium.

### 1.5.2 Stream Information File 15

The stream information file 15 is a stream information file that ensures random access to packets constituting the transport stream 14 stored on the stream file 10 and playback of the transport stream 14 and other transport stream without interruption. With such a structure of the stream information file 15, the stream file 10 is managed as an "AV clip". The stream information file 15 has stored thereon a 2D stream information file 16 and a 3D stream information file 17. The 3D stream information file 17 includes clip information for base view (clip base information 18), clip information for dependent view (clip dependent information 19), and an entry map 20 for stereoscopic display.

### 1.5.3 Clip Base Information 18

The clip base information 18 includes extent start point information for base view. The clip dependent information 19 includes extent start point information for dependent view. The extent start point information for base view is composed of a plurality of source packet numbers. The plurality of source packet numbers each indicate what packet number a divided portion (extent) constituting the main TS is. The extent start point information for dependent view is also composed of a plurality of source packet numbers. The plurality of source packet numbers each indicate what packet number a divided portion (extent) constituting the sub TS is. By using the pieces of extent start point information, the stereoscopic display interleaved stream file is divided into the main TS and the sub TS.

### 1.5.4 Playlist Information File 21

The playlist information file 21 has stored thereon information for causing a playback device to play back a playlist. The "playlist" is a playback path that defines playback sections on a time axis of the TS and logically designates the playback order of the playback sections. The playlist defines how long and which part of the TS to be played back and what order the scene is to be deployed. The playlist information defines "type" of the playlist. The playback path defined by the playlist information is a so-called "multipath". The multipath is a combination of a playback path (main path) defined for the main TS and a playback path (subpath) defined for the sub TS. By defining a playback path for the base-view video stream in the multipath and defining a playback path for the dependent-view video stream in the subpath, it is possible to preferably define a combination of video streams for performing stereoscopic playback.

This completes the description of the recording medium to be played back by the playback device. Next, the following describes the details of view components constituting the base-view video stream and the dependent-view stream.

### 1.5.5 Details of View Components

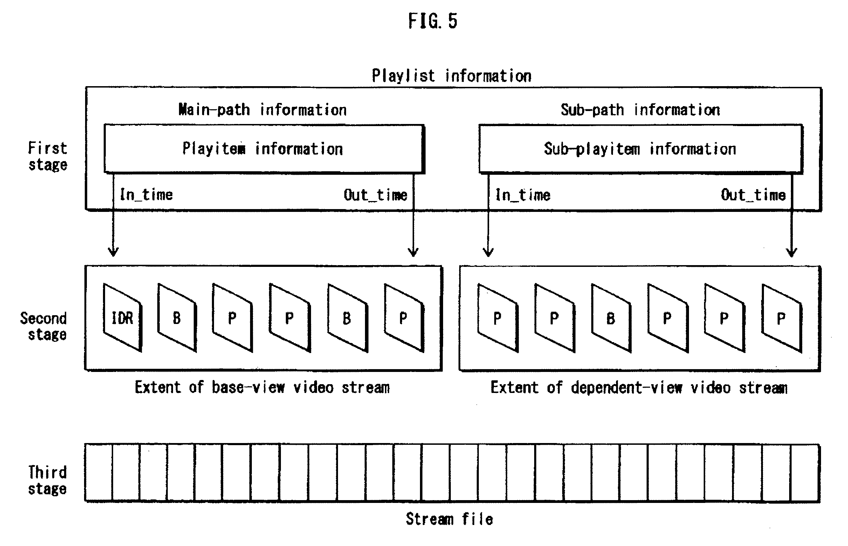

FIG. 5 shows the playlist information, the base-view video stream, the dependent-view stream, and the stream file playlist information in correspondence with one another. The first stage in FIG. 5 shows mainpath information and subpath information that are included in the playlist information. The mainpath information is composed of at least one piece of playitem information. The playitem information defines a playback section by defining a start point of the playback section "In_Time" and an end point of the playback section "Out_Time" on the time axis of the base-view video stream.

Also, the subpath information is composed of at least one piece of subplayitem information. The subplayitem information defines a playback section by defining a start point of the playback section "In_Time" and an end point of the playback section "Out_Time" on the time axis of the dependent-view video stream.

The second stage in FIG. 5 shows the base-view video stream and the dependent-view stream. In FIG. 5, the base-view video stream is a sub-bit stream whose view_id in the MVC standards is 0, and is a sequence of view components whose view_id in the MVC standards are 0. An MPEG-4 MVC base-view video stream is compliant with the constraint of MPEG-4 AVC video streams.

An MVC dependent-view video stream is a sub-bit stream whose view_id in the MVC standards is 1, and is a sequence of view components whose view_id in the MVC standards are 1.

The base-view video stream shown in the second stage in FIG. 5 is composed of a plurality of base-view components. Also, the dependent-view stream is composed of a plurality dependent-view components. In the present embodiment, each base-view component compliant with the MVC standards is main-view data, and each dependent-view component compliant with the MVC standards is sub-view data. These base-view components and dependent-view components each have a picture type such as IDR, B, and P.

The view components are a plurality of pieces of picture data that are simultaneously played back during one frame period for realizing stereoscopic playback. Compression-coding based on the correlation between view points is realized by performing compression-coding based on the correlation between pictures using the view components of the base-view video stream and the dependent-view video stream as picture data. A pair of a view component of the base-view video stream and a view component of the dependent-view video stream that are allocated to one frame period constitutes one access unit. Random access can be performed in units of access units.

The base-view video stream and the dependent-view video stream each have the GOP structure in which each view component is defined as a "picture", and is composed of a closed GOP and an open GOP. The closed GOP is composed of an IDR picture, and B pictures and P pictures that follow the IDR picture. The open GOP is composed of a Non-IDR I-picture, and B pictures and P pictures that follow the Non-IDR 1 picture.

According to the stereoscopic interleaved stream file format, extents of a main transport stream (main TS) including a base-view video stream and extents of a sub transport stream (sub TS) including a dependent-view video stream are alternately arranged in an interleaved manner.

The third stage in FIG. 5 shows a packet sequence of source packets constituting the stream file.

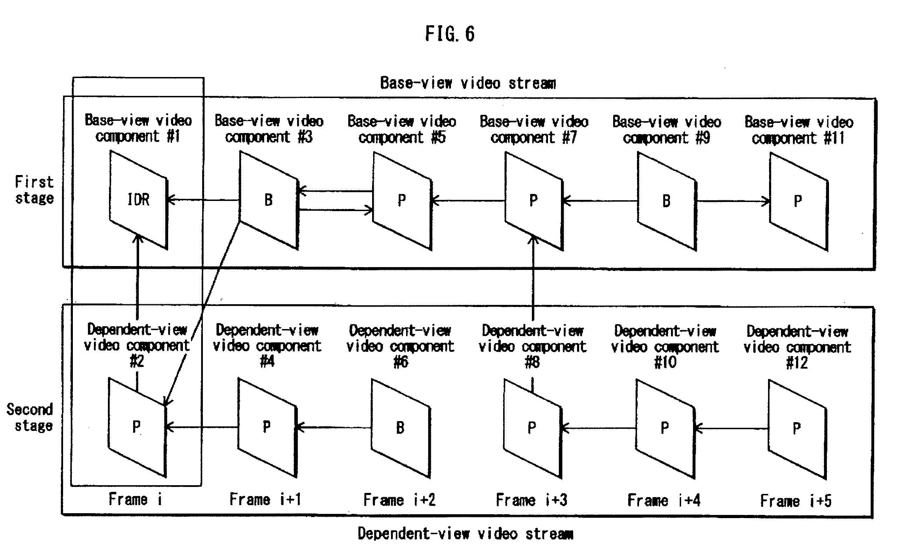

FIG. 6 shows the base-view components constituting the base-view video stream and the dependent-view components constituting the dependent-view stream. The first stage in FIG. 6 shows the base-view components constituting the base-view video stream. The second stage in FIG. 6 shows the dependent-view components constituting the dependent-view stream.

In FIG. 6, a pair of a base-view component #1 and a dependent-view component #2 constitutes a frame i. A pair of a base-view component #3 and a dependent-view component #4 constitutes a frame i+1. A pair of a base-view component #5 and a dependent-view component #6 constitutes a frame i+2.

These base-view components and dependent-view components are arranged in the display order, and each arrow between the view components represents a reference relationship. The dependent-view component #2 has a P-picture type, and refers to the base-view component #1 as a reference picture. The dependent-view component #4 has a P-picture type, and refers to the base-view component #3 as a reference picture. Since picture type and reference picture can be set for each of the view component in units of slices, some of the view components each refer to a plurality of view components as reference pictures.

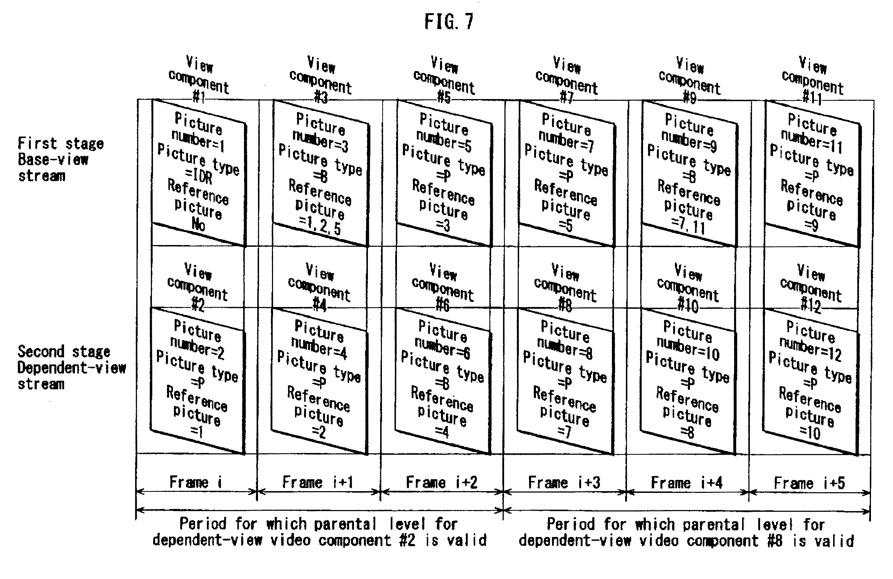

F1G. 7 shows a picture number, a picture type, and a reference picture for each of the base-view components and dependent-view components shown in FIG. 6. With respect to the dependent-view component #2, a picture number is "2", a picture type is "P-picture", and a reference picture is the base-view component # 1 having a picture number of "1".

With respect to the dependent-view component #4, a picture number is "4", a picture type is "P-picture", and reference pictures are the dependent-view component #2 having a picture number of "2" and the base-view component #3 having a picture number of "3".

Among the dependent-view components shown in FIG. 7, the dependent-view component #2 in the frame i and the dependent-view component #8 in the frame i+3 each have, as a reference picture, a base-view component that is in the same frame with the dependent-view component. The dependent-view components #2 and #8 each have a parallax component from the base-view component in the same frame. Accordingly, by converting each of a parallax between the dependent-view component #2 and the base-view component #1 and a parallax between the dependent-view component #8 and the base-view component #7 into a stereoscopic effect level, it is possible to realize appropriate stereoscopic display effect control.

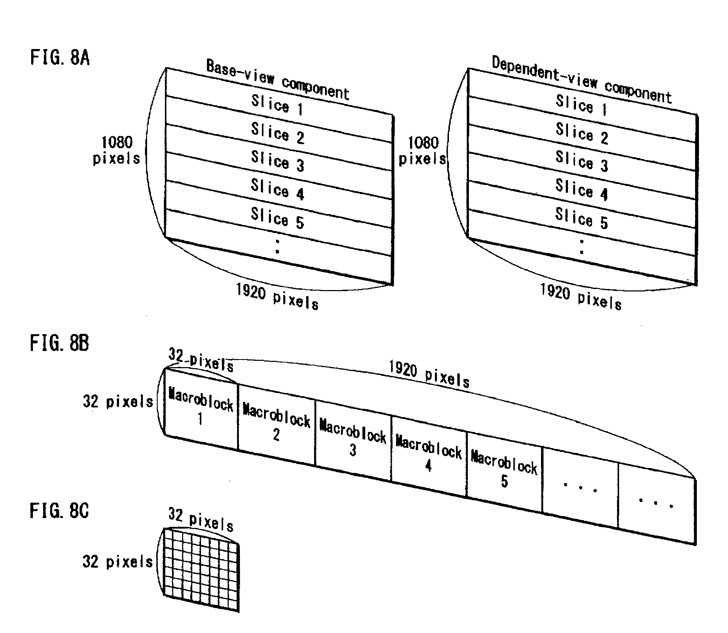

F1G. 8 shows the hierarchical correspondence among a base-view component, a dependent-view component, slices, and macroblocks.

FIG. 8A shows the structure of the base-view component and the dependent-view component. These view components are each composed of horizontal 1920 × vertical 1080 pixels. The view component is divided into a slice that is a pixel group composed of horizontal 1920 × vertical 32 pixels. FIG. 8B shows the internal structure of the slice. The slice is composed of a plurality of arranged macroblocks that are each a pixel group composed of horizontal 32 × vertical 32 pixels. FIG. 8C shows the structure of the macroblock that is a pixel group composed of horizontal 32 × vertical 32 pixels. Compression-coding and motion compensation are performed on each of the view components in units of macroblocks. Accordingly, by performing such processing on the macroblocks, it is possible to detect appropriate parallax for performing stereoscopic effect level conversion.

This completes the description of the recording medium. The following describes in detail the internal structure of the playback device.

### 1.6 Structure of Playback Device 1

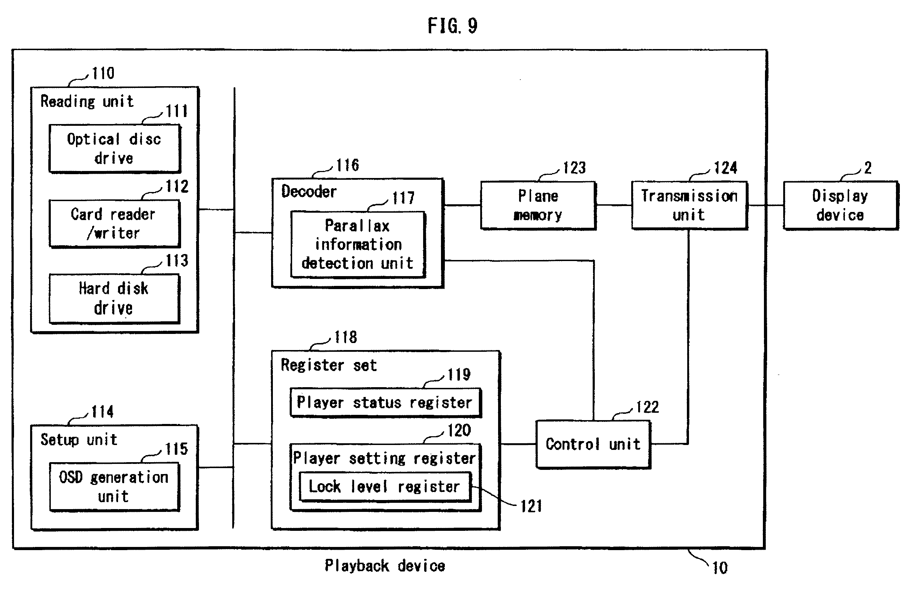

The following describes the structure of the playback device 1. FIG. 9 is a block diagram showing an example of the structure of the playback device 1 relating to the Embodiment 1. As shown in FIG. 9, the playback device 1 includes a reading unit 110, a setup unit 114, a decoder 116, a register set 118, a control unit 122, a plane memory 123, and a transmission unit 124. The reading unit 110 includes an optical disc drive 111. a card reader/writer 112, and a hard disk drive 113. The setup unit 114 includes an OSD generation unit 115. The decoder 116 includes a parallax information detection unit 117. The register set 118 includes a player status register 119 and a player setting register 120. The player setting register 120 includes a lock level register 121.

### 1.6.1 Reading Unit 110

The reading unit 110 reads the playlist information file, the stream information file, and the stream file from the recording medium via the optical disc drive 111, the card reader/writer 112, and the hard disk drive 113.

Specifically, when reading a stereoscopic display interleaved stream file, the reading unit 110 performs processing of dividing the stereoscopic display interleaved stream file into a main TS and a sub TS and storing the divided TS and sub TS in different buffers. This division processing is performed by repeating (i) extracting source packets from the stereoscopic display interleaved stream file corresponding in number to the source packet numbers indicated by the extent start point information included in the clip dependent information, and reading the extracted source packets into a buffer and (ii) extracting source packets from the stereoscopic display interleaved stream file corresponding in number to the source packet numbers indicated by the extent start point information included in the clip base information, and reading the extracted source packets into another buffer.

### 1.6.2 Setup Unit 114

The setup unit 114 displays a setup menu in response to a user's operation via a remote control or the like to receive various settings from the user, and writes the received settings into the player setting register 120 included in the register set 118. The setup unit 114 has functions as a reception unit and an authentication unit. The setup menu receives five items of lock level, country/area, menu language, audio language, and subtitle language. Here, the lock level is a level for parental lock, and represents a threshold value determined by a person among a plurality of users having possibilities of using the playback device, who has a parental authority of a viewer. When a level given to a view component is equal to or lower than this lock level, stereoscopic display effect with the given level is permitted. On the other hand, when the level given to the view component is higher than this lock level, the stereoscopic display effect with the given level is prohibited. Also, setup or change of the lock level is performed only after password authentication succeeds. When a password that has been set in advance by the person having the parental authority is not authenticated, setup or change of the lock level is not performed. In the above case, password authentication is employed as user authentication for performing setup or change of the lock level. Alternatively, without being limited to the password authentication, any user authentication may be employed such as biometric authentication.

### 1.6.3 OSD Generation Unit 115

The OSD generation unit 115 generates a bit map, and writes the generated bit map into the plane memory.

### 1.6.4 Decoder 116

The decoder 116 preloads view components constituting the dependent-view video stream, and decodes a view component having a picture type (IDR type) for decoder refresh at the beginning of the closed GOP included in the base-view video stream. When this decoding is performed, all of the internal buffers are cleared. After decoding the view component having IDR type in this way, the decoder 116 decodes a subsequent view component of the base-view video stream that has been compression-coded based on the correlation with this decoded view component having IDR type, and decodes the view component of the dependent-view video stream in the same frame with the subsequent view component. When uncompressed picture data of each of the view components is obtained as a result of the decoding, the decoder 116 stores the obtained uncompressed picture data in a buffer for storing decoded data (decoded data buffer), and determines the stored picture data as reference pictures.

By using these reference pictures, the decoder 116 performs motion compensation on a subsequent view component of the base-view video stream and a view component of the dependent-view video stream in the same frame. When uncompressed picture data is obtained as a result of the motion compensation, the decoder 116 stores, in the decoded data buffer, the obtained uncompressed picture data of each of the subsequent view component of the base-view video stream and the view component of the dependent-view video stream in the same frame, and determines the stored uncompressed picture data as reference pictures. The decoder 116 performs the above decoding at a decoding starting time indicated in a decode time stamp of each access unit.

### 1.6.5 Parallax information Detection Unit 117

The parallax information detection unit 117 is a compositional element for realizing extended functions of the video decoder 116, and detects parallax information and converts the detected parallax information into a level. Decoding of view components performed by the decoder 116 includes inverse quantization, variable code length coding, and motion compensation. Motion compensation on the dependent-view component is performed by using macroblocks constituting the base-view component as reference macroblocks. Here, a motion vector is calculated for each macroblock of the dependent-view component and each macroblock of the base-view component. Accordingly, this motion vector is detected as parallax information, and the detected parallax information is converted into a level. By performing this level conversion processing, the dependent-view component is provided with a level representing the degree of stereoscopic display effect is exhibited by a parallax from the base-view component.

### 1.6.6 Register Set 118

The register set 118 includes a plurality of player status registers and a plurality of player setting registers.

### 1.6.7 Player Status Register 119

The player status register 119 is a hardware source for storing thereon an operand to be used for an arithmetic operation and a bit operation performed by an MPU of the playback device. When an optical disc is loaded, an initial value is set. Also, when the status of the playback device changes, for example, when the current playitem changes, the player status register 119 judges whether the stored operand is valid. A value to be stored as an operand is, for example, a playlist number of the current playlist and a stream number of the current stream. Since the initial value is stored when the optical disc is loaded, this initial value is just temporarily stored. When the optical disc is ejected or when the playback device powers off, this stored initial value becomes invalid.

### 1.6.8 Player Setting Register 120

The player setting register 120 differs from the player status register 119 because of having power stabilization. Since the player setting register 120 has power stabilization, when the playback device powers off, a value stored in the player setting register 120 is saved to a nonvolatile memory. Then, when the playback device powers on, the saved stored value is restored to the player setting register 120. In the player setting register 120, the following information is set: various configurations of the playback device determined by the manufacture before shipment; and various configurations set by the user in accordance with the setup procedure. Also, in the case where the playback device is connected with a device such as a TV system, a stereo, and an amplifier included in a hometheater system, the capability of the connected device that is obtained via negotiation is set in the player setting register 120.

### 1.6.9 Lock Level Register 121

The lock level register 121 is a compositional element included in the player setting register 120, and records a lock level written by the setup unit 114.

### 1.6.10 Control Unit 122

The control unit 122 compares a stereoscopic effect level determined by the parallax information detection unit 117 with a lock level recorded by the lock level register 121, and performs stereoscopic display effect control based on a result of the comparison. Specifically, when the stereoscopic effect level is higher than the lock level, the control unit 122 performs stereoscopic display effect control. When the stereoscopic effect level is equal to or lower than the lock level, the control unit 122 does not perform stereoscopic display effect control.

Here, the stereoscopic display effect control indicates switching from the 3D playback mode to the 2D playback mode, and is realized by outputting only uncompressed pictures constituting the base-view component to the display device 2. When the stereoscopic display effect control is not performed, the 3D playback mode is maintained.

### 1.6.11 Plane Memory 123

The plane memory 123 stores thereon uncompressed pictures resulting from decoding processing performed by the decoder 116. Also, the plane memory 123 stores thereon a bit map generated by the OSD generation unit 115.

### 1.6.12 Transmission Unit 124

When getting connected with another device included in the home theater system via an interface, the transmission unit 124 moves to the negotiation phase, and then moves to the data transfer phase so as to perform data transmission.

The negotiation phase is for receiving the capability of the device connected with the playback device (such as decoding capability, playback capability, and display frequency) and setting the capability in the player setting register 120 so as to determine a transmission system for subsequent transmission. The transmission unit 124 moves to the data transfer phase via this negotiation phase. In the data transfer phase, the transmission unit 124 transfers side-by-side picture data, which has been generated by laterally combining the base-view component and the dependent-view component, to the display device at a high rate in accordance with the horizontal sync period of the display device. Here, when the level converted by the video decoder is lower than the set lock level, the playback device is set to the 3D playback mode, and the transmission unit 124 combines the base-view component and the dependent-view component with each other, and outputs the combined component to the display device.

When the level converted by the video decoder is equal to or higher than the set lock level, the playback device is set to the 2D playback mode, and the transmission unit outputs only the base-view component to the display device.

In the data transfer phase, during a horizontal retrace period and a vertical retrace period of the display device, the transmission unit 124 can transfer uncompressed audio data in a plain text format and other additional data to devices connected with the playback device (including an amplifier and a speaker as well as the display device). This allows the devices such as the display device, the amplifier, and the speaker to receive uncompressed picture data and audio data in the plain text format, and other additional data, thereby realizing playback. The level obtained by the video decoder can be output to the connected display device during the horizontal retrace period and the vertical retrace period.

This completes the description of the internal structure of the playback device. The following describes the details of settings of playback mode in the playback device.

### 1.7 Selection of Playback Mode

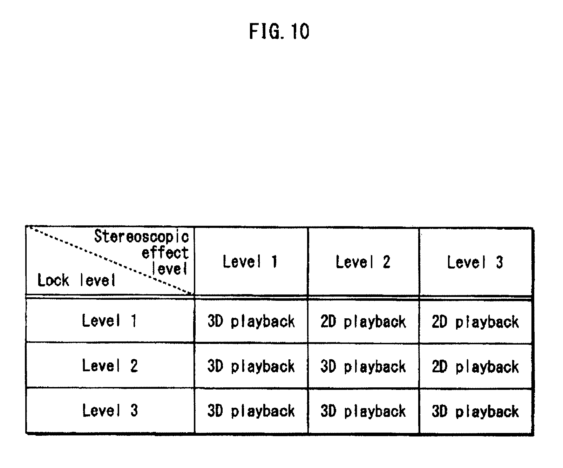

The following describes to which one of the 2D playback mode and the 3D playback mode the playback device is to be set in accordance with the relation between lock level and stereoscopic effect level. Assume that the lock level is divided into three stages of Level 1, Level 2, and Level 3, and the stereoscopic effect level is also divided into three stages of Level 1, Level 2, and Level 3. The table in FIG. 10 shows, in such a case, which one of the 2D playback mode and the 3D playback mode the playback device is to be selected depending on the combination of the lock level and the stereoscopic effect level.

F1G. 10 shows the correspondence relationship between stereoscopic effect level and lock level. In FIG. 10, the stereoscopic effect level and the lock level each have three stages. According to FIG. 10, when the lock level is at Level 2, the playback device performs normal 3D playback of a 3D video having the stereoscopic effect level at Level 1 or Level 2. Also, when the lock level is at Level 3, the playback device switches the playback mode to perform 2D playback of a 3D video having the stereoscopic effect at Level 3.

This completes the description of the playback mode. The following describes level conversion of stereoscopic effect level.

### 1.8 Stereoscopic Effect Level Conversion

Level conversion into either of Level 1, Level 2, and Level 3 in FIG. 10 is performed based on the "3DC Safety Guideline" issued by the 3D Consortium (revised on December 27, 2009). Specifically, detected parallax information is converted into a stereoscopic effect level having three stages, based on the range of parallax angle (parallax angle |β-α| is equal to or lower than 40 arcminutes (40/60 degrees)) for realizing appropriate stereoscopic display recommended by the 3DC Safety Guideline and the range of parallax angle (parallax angle |β-α| is equal to or lower than 70 arcminutes (70/60 degrees)) for avoiding strong stereoscopic display.

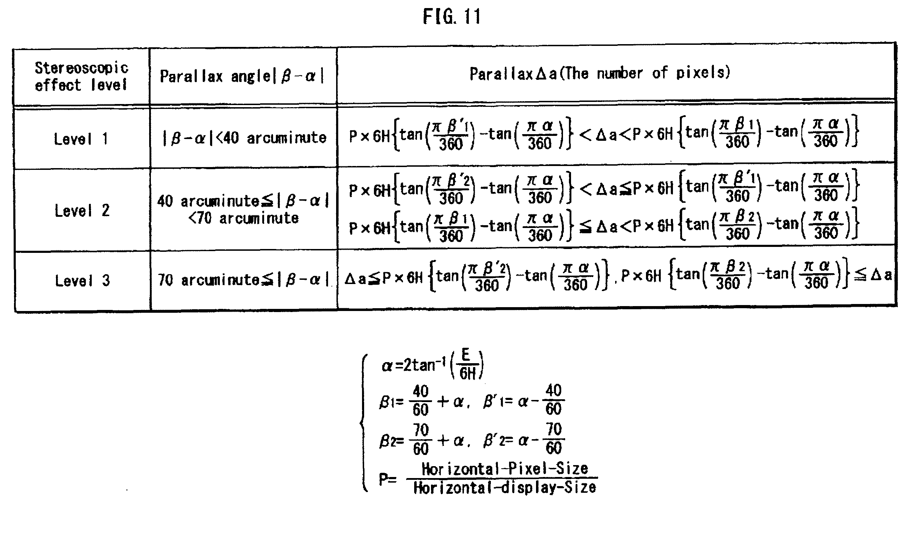

As described above, the stereoscopic effect level represents the parallax angle representing stereoscopic display effect in stages. This parallax angle changes depending on the distance Δa, that is, the number of pixels of the base-view component and the dependent-view component on the screen. In the case where the stereoscopic effect level is divided into three stages of Level 1, Level 2, and Level 3, the range of parallax angle and the number of pixels that constitute the distance Δa are shown in FIG. 11 in a tabular format.

FIG. 11 shows the correspondence relationship among stereoscopic effect level, parallax angle, and parallax in a tabular format. In the table shown in FIG. 11, the horizontal fields are composed of fields for stereoscopic effect level, parallax angle, and parallax. The stereoscopic effect level is divided into three stages of Level 1, Level 2, and Level 3 in the vertical rows. The field for parallax angle shows the range of a parallax angle corresponding to each of the stereoscopic effect level at Level 1, Level 2, and Level 3. According to the table, Level I corresponds to the parallax angle of lower than 40 arcminutes, Level 2 corresponds to the parallax angle of equal to or higher than 40 and lower than 70 arcminutes, and Level 3 corresponds to the parallax angle of equal to or higher than 70 arcminutes. The field for parallax shows in the vertical rows the range of the number of pixels that constitute the distance Δa corresponding to the range of the parallax angle |β-α|. According to the Embodiment 1, parallax information is calculated based on information of a motion vector detected resulting from motion compensation. The motion vector is detected as the number of pixels, and accordingly level conversion is performed based on the number of pixels constituting the distance Δa.

Here, the following describes the relationship between distance Δa, and convergence angles α and β that define parallax angle |β-α|. The convergence angles α and β are each represented in "degree". Firstly, with respect to a triangle including the convergence angle β shown in FIG. 2A and FIG. 2B, the interpupil distance E is calculated using the depth 3H-a by an expression E = 2×(3H-a)×tan(πβ/360). Similarly, with respect to a triangle including the convergence angle β shown in FIG. 2A and FIG. 2B, the distance Δa is calculated using the amount of pop-out a by an expression Δa = 2×a×tan(πβ/360). That is, the total of the interpupil distance E and the distance Δa is calculated by an expression E+Δa = 2×3H×tan(πβ/360). Also, by modifying this expression, the distance Δa is calculated by an expression Δa = 6H×tan(πβ/360)-E. Here, with respect to a triangle including the convergence angle α shown in FIG. 2A and FIG. 2B, the interpupil distance E is calculated using the convergence angle α by an expression E = 2×3H×tan(πα/360). Accordingly, by assigning this expression to the above expression of Δa, the distance Δa is calculated by an expression Δa = 6H{tan(πβ/360)-tan(πα/360)}.

Accordingly, the number of pixels that constitute the distance Δa is represented using the number of pixels P per mm by an expression Δa (the number of pixels) = P×6H{tan(πβ/360)-tan(πα/360)}. As a result, level conversion is performed, based on the standard in which the range of the parallax angle |β-α| has been converted into the range of the number of pixels that constitute the distance Δa based on the above expression. In FIG. 11, the field for parallax shows in the vertical row the range of the number of pixels that constitute the distance Δa into which the range of the parallax angle |β-α| has been converted based on the above expression.

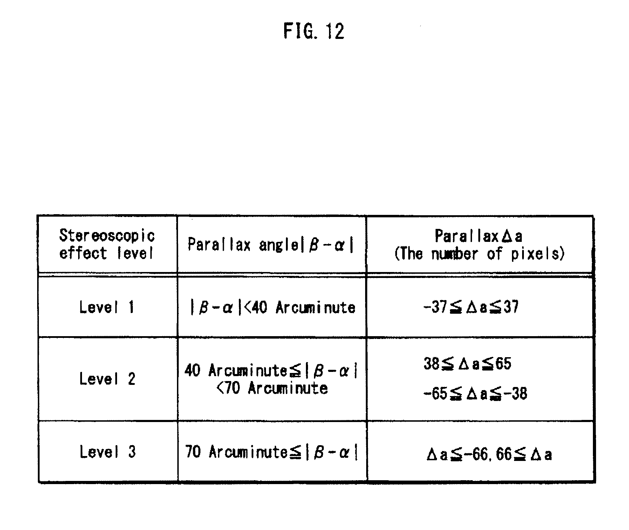

The table of FIG. 11 shows that the distance Δa is represented in mathematical expression. In the case where the distance Δa is set to a specific numerical value using the values α and β, the distance Δa is represented as shown in FIG. 12.

FIG. 12 shows the range of the number of pixels that constitute the distance Δa in the case where the display device 2 is a TV monitor of horizontal 1920 × vertical 1080 pixels and 50-inch type (horizontal 1106 mm × vertical 622 mm). As shown in FIG. 12, when the number of pixels that constitute the distance Δa is equal to or higher than 66 or equal to or less than -66, the stereoscopic effect level is set to Level 3. When the number of pixels that constitute the distance Δa is in the range of from 38 to -65 inclusive, the stereoscopic effect level is set to Level 2. When the number of pixels that constitute the distance Δa is in the range of from -37 to 37 inclusive, the stereoscopic effect level is set to Level 1. In the present embodiment, the interpupil distance E is 60 mm.

This completes the description of stereoscopic effect level conversion. Next, the following describes the setup menu for setup/change of lock level.

### 1.9 Setup Menu

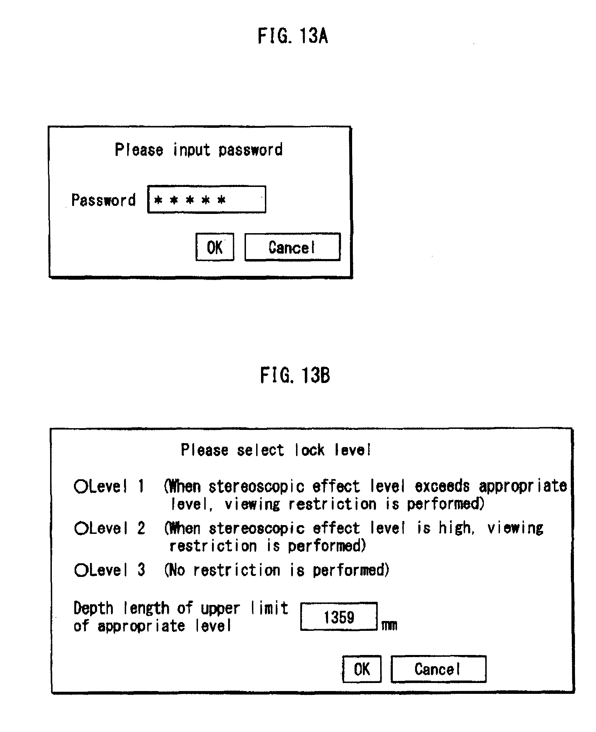

The setup menu includes general setup items for audio language and subtitle language and so on, and further includes an item for lock level. When this item is selected, a menu shown in FIG. 13 is displayed.

FIG. 13A shows a password input screen displayed for lock level selection. Password input is necessary for checking whether a user who hopes to set or change the lock level is a parental authority of a viewer.

FIG. 13B shows a lock level selection screen. The user changes the lock level in accordance with display on this screen.

When a check box for Level 1 is checked, the lock level is set to the Level 1 (restriction to comfortable level). The checking of this check box permits stereoscopic display effect to the upper limit of Level 1, that is, stereoscopic display effect with the parallax angle of 40 arcminutes or lower.

When a check box for Level 2 is checked, the lock level is set to Level 2 (restriction on only high level). The checking of this check box permits stereoscopic display effect to the upper limit of Level 2, that is, stereoscopic display effect with the parallax angle of less than 70 arcminutes.

When a check box for Level 3 is checked, the lock level is set to Level 3 (no restriction). The checking of this check box permits stereoscopic display effect to the upper limit of Level 3, that is, stereoscopic display effect with the parallax angle of 70 arcminutes or higher.

The depth field shows, in units of "mm", the depth corresponding to the upper limit of the angle range in Level 1. In the present embodiment, the upper limit of Level 1 set to 40 arcminutes, and the depth field shows the above 3H-a, namely, 1359 mm, as the depth corresponding to 40 arcminutes. Input of a numerical value into the depth field allows the depth to be increased and decreased. With this increase and decrease, the threshold value that should be Level 2 can be changed.

By performing the lock level setup in the menu as described above, it is possible to change the lock level in the player setting register 120 to any of Level 1, Level 2, and Level 3. Also, the user can freely determine the threshold that should be Level 1. This completes the description of lock level. The following describes the details of stereoscopic effect level.

### 1.10 Details of Stereoscopic Effect Level

The lock level is determined via an artificial operation such as setup by a manufacture or change by a user. Compared with this, the stereoscopic effect level is determined based on the characteristics of two images, that is, the parallax of corresponding pixels in a base-view component and a dependent-view component. The following describes how to detect the parallax that is the number of pixels positioned between a pixel in a base-view component and a pixel in a dependent-view component.

### Firstly, detection of parallax information is described.

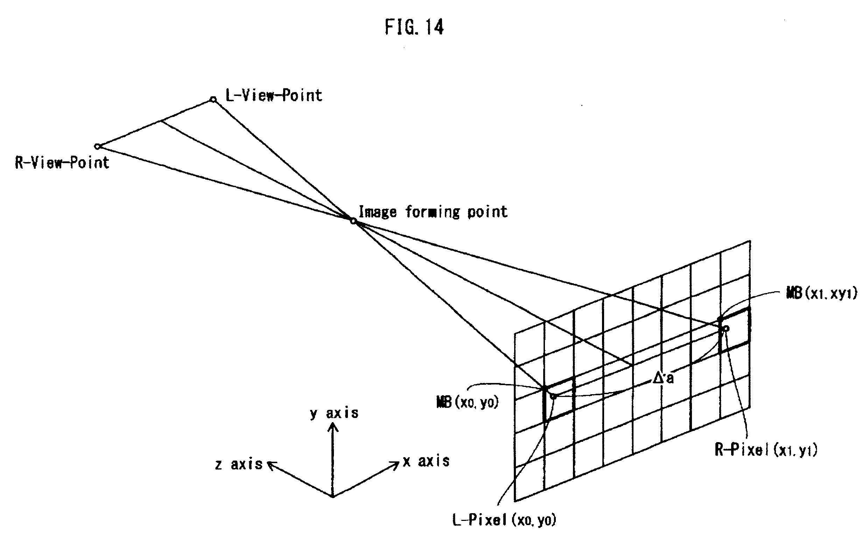

FIG. 14 is created based on FIG. 2. The lower right side in FIG. 14 shows a macroblock to which a right-eye pixel R-Pixel (x1,y1) belongs and a macroblock to which a left-eye pixel L-pixel (x0,y0) belongs. It is possible to approximate this parallax between the right-eye pixel R-Pixel (x1,y1) and the left-eye pixel L-pixel (x0,y0), by using the coordinate of the macroblock to which the right-eye pixel R-Pixel (x1,y1) belongs and the coordinate of the macroblock to which the left-eye pixel L-pixel (x0,y0) belongs. By calculating the difference between the macroblocks on the X coordinate, the value Δa can be obtained.

The following describes approximation of the parallax using the coordinates of the macroblocks.

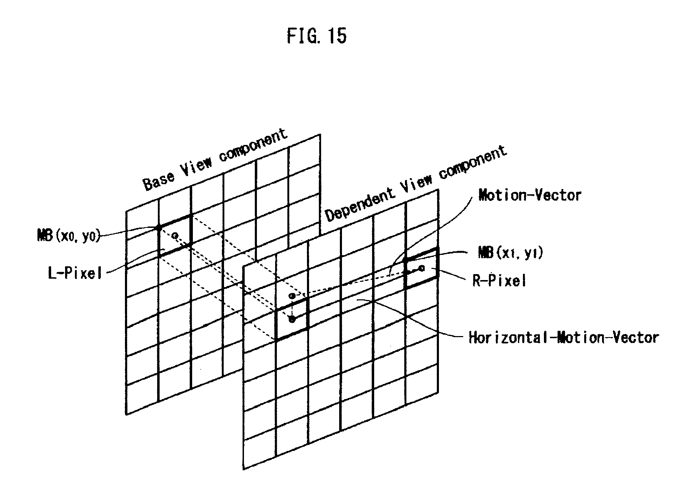

FIG. 15 shows a base-view component to which a MB (x0,y0) belongs and a dependent-view component to which a MB (x1,y1) belongs. FIG. 15 shows the base-view component and the dependent-view component that are overlaid with each other. The dependent-view component is on the front side, and the base-view component is on the back side. The dashed line in FIG. 15 represents the MB (x0,y0) that belongs to the base-view component is mapped onto the dependent-view component. The difference between this mapping point and the right-eye pixel R-Pixel (x1,y1) is the parallax between the right-eye pixel R-Pixel (x1,y1) and the left-eye pixel L-pixel (x0,y0). Here, the MB (x0,y0) and the MB (x1,y1) represent the same object in different viewing points and directions, and are strongly correlated with each other. Accordingly, when the MB (x1,y1) is decoded for decoding the dependent-view component, the strongly correlated MB (x0,y0) is selected as a reference macroblock. When the reference macroblock is selected, a motion vector is calculated with respect to each of a plurality of macroblocks that are included in the base-view component and are close to the MB (x1,y1). Also, a motion vector is calculated with respect to the MB (x0,y0). Accordingly, it is possible to detect a horizontal component of the motion vector (Horizontal_Motion_Vector) with respect to the MB (x0,y0), as the approximate value of the parallax between the base-view component and the dependent-view component.

By using the approximate value of the parallax as the distance Δa and calculating the parallax angle as described above, it is possible to obtain the stereoscopic effect level of the base-view component and the dependent-view component that are currently being played back. This completes the description of the stereoscopic effect level.

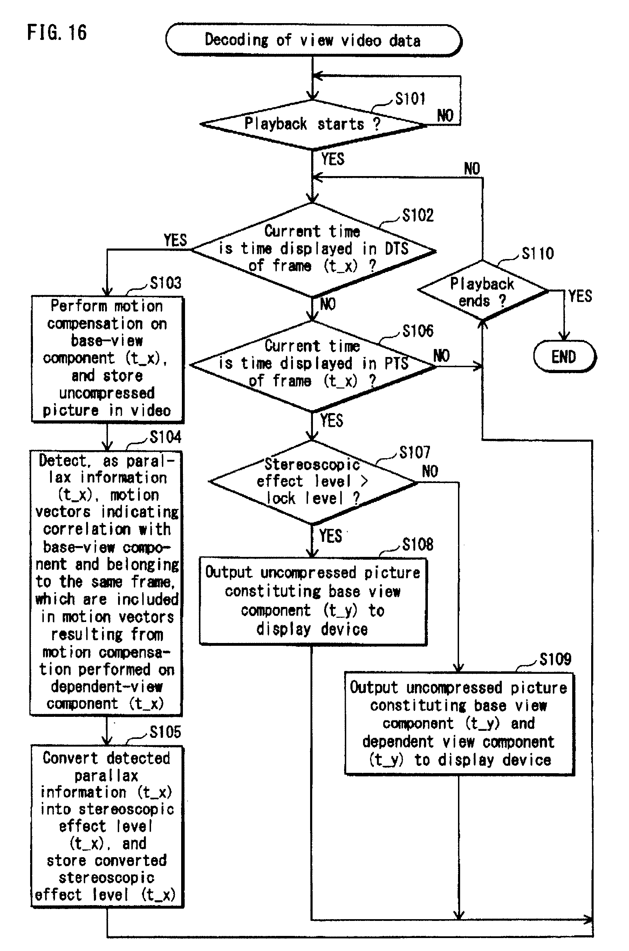

By writing the processing procedure shown in the flow charts of FIG. 16-FIG. 18 in an object-oriented programming language or the like and causing the processor to execute the processing procedure, it is possible to implement the above-described structural elements in the playback device as software. The following describes the processing procedure of implementing the structural elements in the playback device.

### 1.11 Procedure of Decoding Processing

FIG. 16 is a flow chart showing the procedure of decoding processing performed by the playback device 1 relating to the Embodiment 1. As shown in FIG. 16, the decoder 116 firstly starts decoding view video data read by the reading unit 110 (Step S101). Here, the decoder 116 starts decoding the x-th frame.

Then, the decoder 116 judges whether the current time is a time indicated by a DTS (Decoding Time Stamp) of a frame (t_x) (Step S102). Here, the DTS is information for designating a decoding time. If judging that the current time coincides with the time indicated by the DTS, the decoder 116 performs decoding processing.

If judging that the current time coincides with the time indicated by the DTS (Step S101: Yes), the decoder 116 performs motion compensation on a base-view component (t_x), and stores an uncompressed picture resulting from the motion compensation in the video plane (Step S103).

Next, the decoder 116 performs motion compensation on a dependent-view component (t_x), and stores an uncompressed picture resulting from the motion compensation in the video plane. Then, the parallax information detection unit 117 detects parallax information (t_x) based on information of the motion vector resulting from the motion compensation (Step S104).

The decoder 116 detects parallax information that represents the number of pixels positioned between the MB including the left-eye pixel L-Pixel and the right-eye pixel R-Pixel, as the number of pixels that constitute the distance Δa. Specifically, the decoder 116 detects the parallax information based on the horizontal component of a motion vector (Norizontal-Motion-Vector) from the MB including the left-eye pixel L-Pixel to the MB including the right-eye pixel R-Pixel. The details of the processing of Step S104 is described in the <Parallax Information Detection Processing>.

The parallax information detection unit 117 determines the parallax information (t_x) detected in Step S104 as the stereoscopic effect level (Step S105). This level determination is performed based on the standard shown in FIG 11.

When the current time does not coincide with the time indicated by the DTS (Step S102: No), the transmission unit 124 judges whether the current time coincides with a time indicated by the PTS (Presentation Time Stamp) of a frame (t_y) (Step S106). Here, the PTS is information for designating the display time. When the current time coincides with the time indicated by the PTS, display processing is performed.

When the current time coincides with the time indicated by the PTS (Step S106: Yes), the control unit 122 judges whether the stereoscopic effect level converted in Step S105 is higher than the lock level recorded in the lock level register 121 (Step S107).

The stereoscopic effect level is generated for the dependent-view component whose parallax information with a base-view component has been accurately detected. Accordingly, the stereoscopic effect level is valid for a period from a PTS of the dependent-view component whose parallax information with the base-view component has been accurately detected until immediately before a PTS of a dependent-view component subsequent to the dependent-view component whose parallax information with the base-view component has been accurately detected. In this valid period, the stereoscopic display effect control based on the stereoscopic effect level is continuously performed.

When the stereoscopic effect level is higher than the lock level (Step S107: Yes), the control unit 122 issues an instruction to the transmission unit 124 to output an uncompressed picture constituting the base-view component (t_y) to the display device 2 (Step S108). As a result, when a stereoscopic video having a stereoscopic effect level higher than a level permitted by a user, it is possible to switch the playback mode to the 2D playback mode.

When the stereoscopic effect level is equal to or lower than the lock level (Step S107: No), the control unit 122 issues an instruction to the transmission unit 124 to output uncompressed pictures that constitute the base-view component (t_y) and a dependent-view component (t_y) to the display device 20 (Step S109).

As described above in Steps S07-S109, the stereoscopic effect level is compared with the lock level, and an uncompressed picture to be output to the display device is changed based on a result of the comparison. As a result, when playing back a stereoscopic video having a stereoscopic effect level higher than a stereoscopic effect level permitted by the user, the playback device 1 switches the playback mode to the 2D playback mode. On the other hand, when playing back a stereoscopic video having a stereoscopic effect level equal to or lower than a stereoscopic effect level permitted by the user, the playback device I performs 3D playback.

When the current time does not coincide with the time indicated by the PTS (Step S106: No), when a judgment result in Step S108 is No, or when a judgment result in Step S109 is No, the decoder 116 judges whether to end the playback (Step 110). When judging not to end the playback (Step S110: No), the decoder 116 performs processing of Step S101. When judging to end the playback (Step S110: Yes), the decoder 116 ends decoding processing of view video data.

In this way, the playback device 1 can perform detection of parallax information and determination of stereoscopic effect level. Then, a stereoscopic effect level is compared with a lock level, and an uncompressed picture to be output to the display device is changed based on a result of the comparison. This makes it possible to perform stereoscopic effect control.

Here, the following describes the technical meaning of detecting parallax information with respect to a dependent-view component that has a base-view component in the same frame as a reference picture.

In a scene in which a stereoscopic video suddenly pops up, the video content greatly changes. Accordingly, a base-view component of the base-view video stream is converted into an IDR picture. It is considered that a dependent-view component that belongs to the same frame to which this base-view component belongs is compression-coded based on the correlation with the IDR picture that is the change point of the video content. The base-view component that is the large change point of the video content is converted into an IDR picture. It is considered that a dependent-view component that belongs to the same frame to which this base-view component belongs is compression-coded based on the correlation with the base-view component that has been converted into the IDR picture. As a result, basically, by detecting parallax information with respect to a dependent-view component that has a base-view component in the same frame as a reference picture, it is possible to appropriately detect parallax information at the large change point of the video content with the GOP temporal accuracy. Therefore, it is possible to suppress to the minimum the increase in loading on the decoder due to detection of parallax information, and also preferably detect a pop-out point of a stereoscopic video in units of GOPs.

### 1.12 Parallax Information Detection Processing (Step S104)

The parallax information detection processing in Step S104 is described in detail with reference to the drawing.

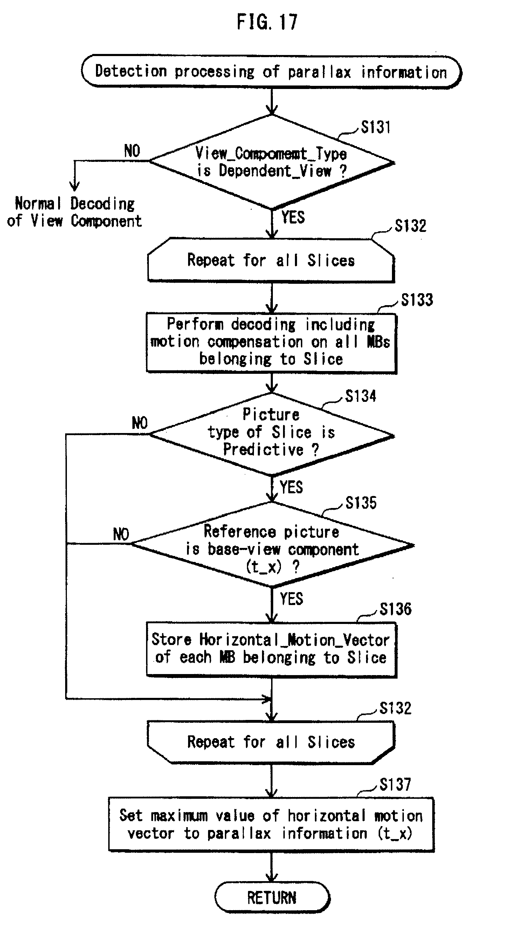

FIG. 17 is a flow chart showing the parallax information detection processing (Step S104) relating to the Embodiment 1. Here, decode processing is performed on the x-th frame.

Firstly, the decoder 116 judges whether a View-Component-Type of a view component is Dependent-View (Step S131). The View-Component-Type indicates an attribute of the view component.

When judging that the View-Component-Type is not the Dependent-View (Step S131: No), the decoder 116 proceeds to decoding processing of a base-view component (t_x+1).

When judging that the View-Component-Type is the Dependent-View (Step S131: Yes), the decoder 116 repeats processing of Steps S133-S136 for each of all Slices (Step S132).

Firstly, the decoder 116 performs decoding processing including motion compensation on all of MBs belonging to the Slice (Step S133).

Next, the decoder 116 judges whether the picture type of the Slice is Predictive (Step S134). Here, a picture having the picture type of Predictive is a picture obtained by performing forward predictive coding among pictures.

When judging that the picture type is Predictive (Step S134: Yes), the decoder 116 judges whether a reference picture for decoding is a base-view component (Step S135).

Some of the dependent-view components each have a picture type of B-picture type or P picture type and does not have a base-view component as a reference picture, In this case, despite being a dependent-view component, there is no parallax with a base-view component. Accordingly, the processing of Steps S134 and S135 is performed in order to exclude such components from parallax information to be detected.

When the reference picture is a base-view component (Step S135: Yes), the parallax information detection unit 117 stores Horizontal-Motion-Vector of each MB belonging to the Slice (Step S136).

When the picture type is not Predictive (Step S134: No), or when the reference picture is not the base-view component (Step S135: No), or when processing in Step S136 is performed, the parallax information detection unit 117 judges whether the processing of Steps S133-S136 is repeated for all of the Slices (Step S132).

When performing the processing for all of the Slices (Step S132: Yes), the parallax information detection unit 117 sets the maximum value of the Horizontal Motion Vector for all of the MBs in the frame (t_x) as parallax information (t_x) in the frame (t_x) (Step S137).

By performing the above operations, it is possible to detect the parallax information (t_x). 1.13 Processing of Setting and Changing Lock Level
The following describes the details of processing of setting and changing lock level with reference to the drawing.

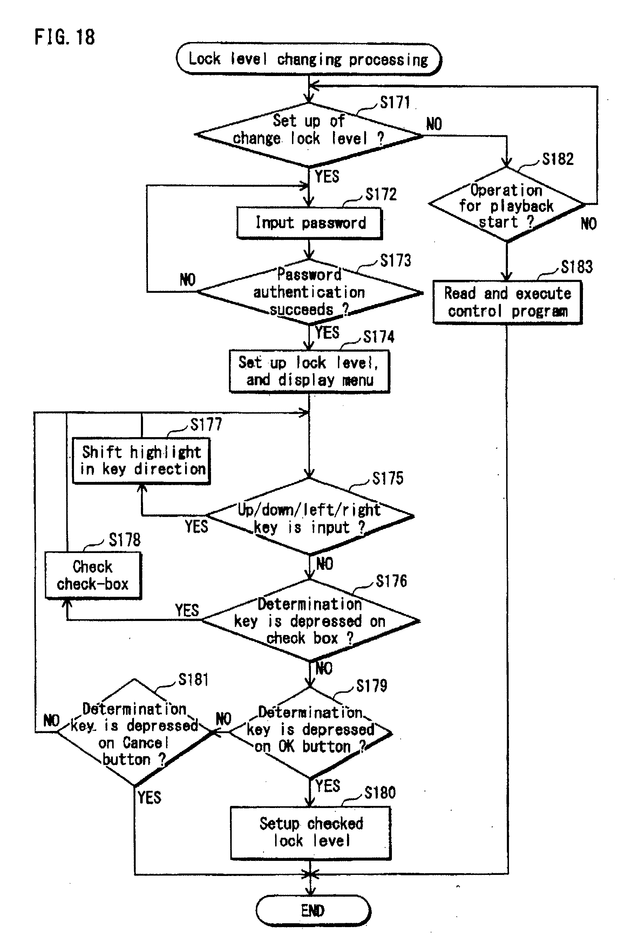

FIG. 18 is a flow chart showing the processing of setting and changing lock level.

Firstly, the setup unit 114 judges whether an operation for setting or changing a lock level has been performed (Step S171).

When judging that a user has performed the operation of setting or changing the lock level (Step S171: Yes), the setup unit 114 displays a password input screen shown in FIG. 13A, and causes the user to input his password (Step S172). Then, the setup unit 114 performs authentication on the password input in Step S172 (Step S173). When the authentication on the password fails, the setup unit 114 performs processing of Step S172.

When the authentication on the password succeeds (Step S173: Yes), the setup unit 114 displays a lock level setup menu shown in FIG. 13B (Step S174). Then, the setup unit 114 judges whether the user has input an up/down/left/right key (Step S175). When judging that the up/down/left/right key has been input, the setup unit 114 shifts highlight in accordance with a direction indicated by the key (Step S176). When judging that the up/down/left/right key has not been input, the setup unit 114 judges whether a determination key has been pressed on a check box (Step S177).

When judging that the determination key has been pressed on the check box, the setup unit 114 checks the check box (Step S178). When judging that the determination key has not been pressed, the setup unit 114 judges whether the determination key has been pressed on an OK button (Step S179).

When judging that the determination key has been pressed on the OK button, the setup unit 114 stores the checked lock level on the lock level register 121 (Step S180). When judging that the determination key has not been pressed, the setup unit 114 judges whether the determination key has been pressed on a Cancel button (Step S181).

When the user has not performed the operation of setting or changing the lock level (S171: No), the setup unit 114 judges whether the user has performed an operation of starting playback (Step S182). When judging that the user has performed the operation of starting playback, the setup unit 114 reads a control program from a recording medium, and executes the read control program (Step S183). When judging that the user has not performed the operation of starting playback, the setup unit 114 performs processing of Step S171.

As described above, according to the present embodiment, information of a motion vector extracted in decoding of data compliant with the MVC standards is used for calculating parallax information so as to perform level conversion. Accordingly, it is possible to keep to the minimum the increase in loading on the playback device due to the level conversion.

### (Embodiment 2)

### 2.1 Ourtline

In the Embodiment 1, the playback device detects parallax information in decoding of the view component, and performs level conversion of the detected parallax information. The Embodiment 2 relates to improved modification in which the display device detects parallax information, and performs level conversion of the detected parallax information so as to restrict the stereoscopic display effect.

A TV, which realizes stereoscopic playback in response to input of a video signal from the playback device, does not include a decoder therein, and accordingly cannot detect a motion vector. Such a TV detects a parallax between a right-eye pixel R-pixel and a left-eye pixel L-pixel from an uncompressed picture. In this case, detection of parallax information for all of lines, and as a result the TV has a heavy load. Accordingly, part of the lines are extracted.

Also, a parallax with respect to a closer object is higher, and a parallax with respect to a more distant object is lower. Accordingly, line extraction is performed on the whole screen in order to detect the maximum parallax on the screen. Specifically, the screen is divided into three areas of the upper, middle, and lower areas, and line extraction is performed one by one with respect to each area. The following describes the Embodiment 2 with reference to the drawings.

### 2.2 Structure

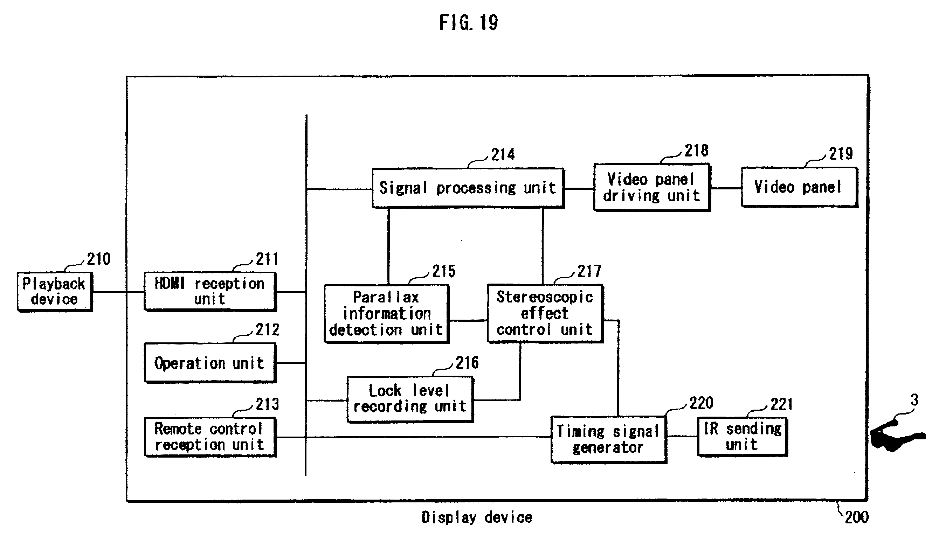

FIG. 19 shows an example of the structure of the display device 200 relating to the Embodiment 2. As shown in FIG. 19, the display device 200 includes an HDMI reception unit 21 l, an operation unit 212, a remote control reception unit 213, a signal processing unit 214, a parallax information detection unit 215, a lock level recording unit 216, a stereoscopic display effect control unit 217, a video panel driving unit 218, a video panel 219, a timing signal generator 220, and an IR sending unit 221.

The HDMI reception unit 211 receives an uncompressed picture and a stereoscopic effect level transmitted from the playback device 210 via an HDMI cable.

The operation unit 212 is used for the user to perform an input operation on the display device 20. Type of the operation unit 212 is not specifically limited as long as the user can perform a desired input operation.

The remote control reception unit 213 receives an operation signal input via a remote control from the user.

The signal processing unit 214 generates a synchronization signal based on the received uncompressed picture.

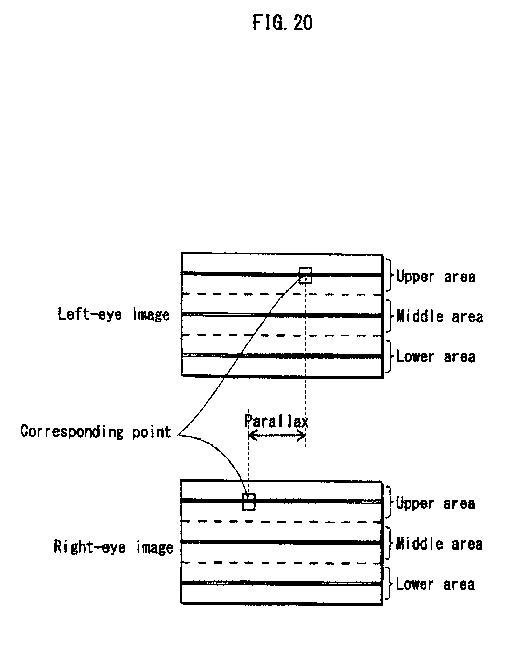

The parallax information detection unit 215 detects a specific horizontal line pixel by a vertical synchronization signal for each of a right-eye image and a left-eye image, and detects the number of pixels constituting a distance Δa based on the correlation between the extracted horizontal line pixels. In the case where horizontal line pixels are extracted for the entire screen, the playback device has a heavy load. Accordingly, the lines are partially extracted. Also, a parallax with respect to a closer object is higher, and a parallax with respect to a more distant object is lower. Accordingly, line extraction is performed on the whole screen in order to detect the maximum parallax on the screen. FIG. 20 shows a parallax detected by the display device 200. The screen is divided into three areas of the upper, middle, and lower areas, and line extraction is performed one by one with respect to each area. Then, pattern matching is performed on horizontal line pixels of the right-eye image and horizontal line pixels of the left-eye image so as to detect corresponding points. Here, the corresponding points indicate the same pixels that differ in only position. The number of pixels that are positioned from the corresponding point in the right-eye image to the corresponding point in the left-eye image is set as parallax information. In FIG. 20, the corresponding point in the left-eye image is positioned on the left side of the corresponding point in the right-eye image. In the case where the corresponding points are in this positional relation, the number of pixels is a positive value. On the contrary, when the corresponding point in the left-eye image is positioned on the right side of the corresponding point in the right-eye image, the number of pixels is a negative value.

The number of pixels that constitute the distance Δa is converted into a stereoscopic effect level. This level conversion is performed based on the standard shown in FIG 11 as described above. In this way, the display device 200 can perform detection of parallax information and conversion of stereoscopic effect level.

The lock level recording unit 216 records the lock level that is set or changed in accordance with user operations. Here, the lock level is a level for parental lock, and represents a threshold value determined by a person among a plurality of users having possibilities of using the display device, who has a parental authority of a viewer. Stereoscopic effect control is performed on a stereoscopic video given to a stereoscopic effect level that is higher than the lock level. In the Embodiment 2, the lock level is divided into three stages of Levels. FIG. 10 shows the correspondence between stereoscopic effect level and lock level. For example, when the lock level is at Level 2 and a stereoscopic video has a stereoscopic level at Level 3, the display device switches the playback mode to the 2D playback mode (performs stereoscopic effect control). When the lock level is at Level 2 and a stereoscopic video has a stereoscopic level at Level 1 or Level 2, the display device does not switch the playback mode to the 2D playback mode.

The stereoscopic display effect control unit 217 compares the stereoscopic effect level determined by the information detection unit 215 with the lock level recorded in the level recording unit 216. When the stereoscopic effect level is higher than the lock level, the stereoscopic display effect control unit 217 performs stereoscopic display effect control. Here, the stereoscopic display effect control is performed by switching the playback mode from the 3D playback mode to the 2D playback mode. Specifically. 2D playback is realized by displaying only pictures constituting a base-view component.

The video panel driving unit 218 drives the video panel 219, based on a synchronization signal generated by the signal processing unit 214 and the stereoscopic display effect control performed by the stereoscopic display effect control unit 217. When playing back a stereoscopic video, the display device 200 alternately displays a right-eye image and a left-eye image. When performing 2D based on the stereoscopic display effect control, the display device 200 displays only one of the right-eye image and the left-eye image.

The video panel 219 is, for example, a liquid crystal display or a plasma display, and displays images in accordance with processing performed by the video panel driving unit 218.

The timing signal generator 220 generates a signal that is for determining a time for opening and closing left and right liquid crystal shutters of the 3D glasses 30. Specifically, the timing signal generator 220 generates a timing signal indicating to close the left-eye liquid crystal shutter when the right-eye image is displayed on the liquid crystal panel 219. Also, the timing signal generator 220 generates a timing signal indicating to close the right-eye liquid crystal shutter when the left-eye image is displayed on the liquid crystal panel 219.

The IR sending unit 221 sends, as an infrared ray, the timing signal generated by the timing signal generator 220.

### 2.3 Operations of Display Device 200

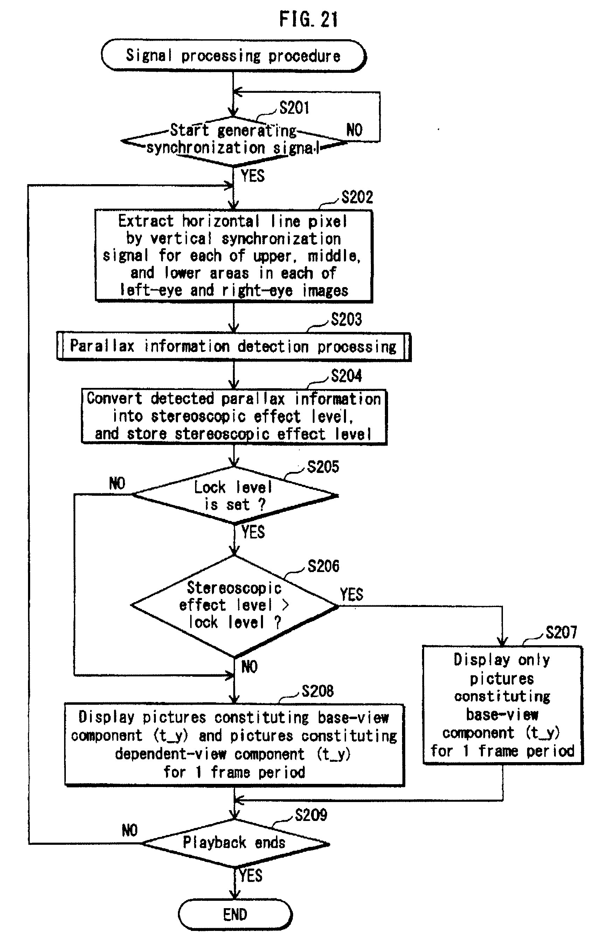

The structural elements of the display device 200 can be implemented by writing a program representing the procedure of the processing shown in the flow chart shown in FIG. 21 in a computer-readable language and causing the processor to execute the program. The following describes implementation of the structural elements of the display device 200 as software, with reference to the flow chart shown in FIG. 21.

FIG. 21 is a flow chart showing the operations of the display device 200 relating to the Embodiment 2. Here, the display device 200 starts display processing on the y-th frame.

The signal processing unit 214 starts generating a synchronization signal, based on uncompressed video data received by the HDMI reception unit 211 (Step S201).

When generation of synchronization signals starts (Step S201: Yes), the parallax information detection unit 215 extracts a horizontal line pixel by a vertical synchronization signal for each of a right-eye image and a left-eye image (Step S202). In the case where horizontal line pixels are extracted for the entire screen, the display device has a heavy load. Accordingly, the lines are partially extracted. Also, a parallax with respect to a closer object is higher, and a parallax with respect to a more distant object is lower. Accordingly, line extraction is performed on the whole screen in order to detect the maximum parallax on the screen. As shown in FIG 20, the screen is divided into three areas of the upper, middle, and lower areas, and line extraction is performed one by one with respect to each area.

The parallax information detection unit 215 detects parallax information using the horizontal line pixels extracted in Step S202 (Step S203). The parallax information represents the number of pixels that constitute the distance Δa. The details of the parallax information detection processing is described in the <Parallax Information Detection Processing (S203)>.

The parallax information detection unit 215 converts the parallax information detected in Step S203 into a stereoscopic effect level, and stores therein the stereoscopic effect level (Step S204). This level determination is performed based on the standard shown in FIG 11.

The stereoscopic display effect control unit 217 judges whether the lock level has been set in the lock level recording unit 216 (Step S205).

When the lock level has been set (Step S205: Yes), the stereoscopic display effect control unit 217 judges whether the stereoscopic effect level converted in Step S204 is higher than the lock level recorded in the lock level recording unit 216 (Step S206).

When the stereoscopic effect level is higher than the lock level (Step S206: Yes), the video panel driving unit 218 displays only pictures that constitute a base-view component (t_y) for one frame period (Step S207). As a result, when a stereoscopic video to be played back has a stereoscopic effect level higher than a stereoscopic effect level permitted by a user, it is possible to switch the playback mode to the 2D playback mode.

When the stereoscopic effect level is equal to or lower than the lock level (Step S206: No), the video panel driving unit 218 displays pictures that constitute a base-view component (t_y) and pictures that constitute a dependent-view component (t_y) for one frame period (Step S208). As a result, when a stereoscopic video to be played back has a stereoscopic effect level equal to or less than a stereoscopic effect level permitted by a user, it is possible to perform 3D playback.

The signal processing unit 214 judges whether to end playback (Step S209). When it is judged to end the playback (Step S209: Yes), the playback ends. When it is judged not to end the playback (Step S209: No), processing of Step S202 is performed.

As described above, it is possible for the display device 200 to detect parallax information, determine a stereoscopic effect level, thereby to stereoscopic display effect control based on a result of comparison of the stereoscopic effect level with the lock level.

### 2.4 Procedure of Parallax Information Detection Processing (S203)

The parallax information detection processing in Step S203 is described in detail with reference to the drawing.

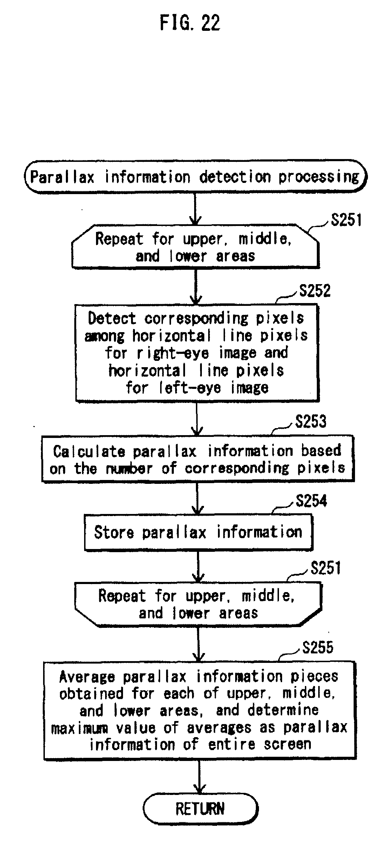

FIG. 22 is a flow chart showing the operations of the parallax information detection processing (Step S203) relating to the Embodiment 2.

Processing from Steps S252 to S254 is repeated for each of the upper, middle, and lower areas (Step S251).

Firstly, the parallax information detection unit 215 performs pattern matching on horizontal line pixels of the right-eye image and horizontal line pixels of the left-eye image so as to detect corresponding points (Step S252). Here, the corresponding points indicate the same pixels that differ in only position.

Next, the parallax information detection unit 215 calculates the number of pixels of the corresponding pixels detected in Step S252, and sets the calculated number of pixels as parallax information (Step S253).

Then, the parallax information detection unit 215 stores therein the parallax information set in S253 (Step S254).

The parallax information detection unit 215 performs processing from Step S252 to S254 for each of the upper, middle, and lower areas, and then sets the maximum value of parallax calculated in the upper, middle, and lower areas as parallax information of the whole screen (Step S255).

The above operations allow the display device 200 to detect parallax information.

In the Embodiment I, calculation target of stereoscopic effect level is limited to a dependent-view component that has been compression-coded based on the correlation with a base-view component. However, in the present embodiment, parallax information is detected based on a parallax between pixels in a right-eye picture and a left-eye picture. Accordingly, it is possible to increase the accuracy of the stereoscopic effect level with no dependence on the picture type of benchmark score.

According to the present embodiment as described above, the display device can perform detection of parallax information and stereoscopic effect level conversion. Then, the display device can compare a converted stereoscopic effect level with a lock level, and perform stereoscopic display effect control based on a result of the comparison. (Embodiment 3)

### 3.1 Outline

In the above embodiments, the display device synchronizes shutters of glasses without exception and causes the user to view a 3D image. In the preset embodiment, by setting the allowable level for each pair of glasses, control is performed to cause each pair of glasses to perform shutter operations in accordance with the set level. The following describes the 3D glasses with reference to the drawings.

### 3.2 Whole Structure

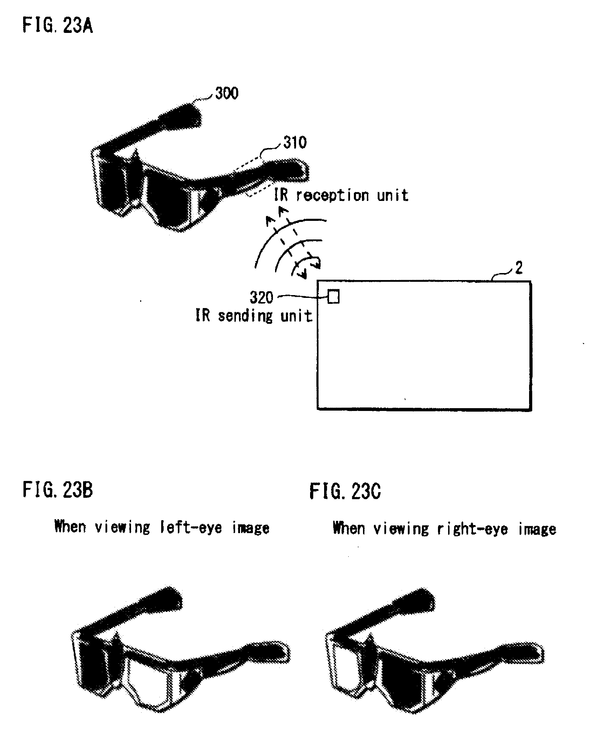

FIG. 23A shows the whole structure of the system relating to the Embodiment 3. 3D glasses 300 are so-called active shutter 3D glasses. The 3D glasses 300 receive, via an lR reception unit 310, a timing signal sent from an IR sending unit 320 of the display device 2. The 3D glasses 300 alternately open and close left and right liquid crystal shutters in accordance with the received timing signal. When a left-eye image is displayed on the display device 2, the 3D glasses 300 close the right liquid crystal shutter so as to cause the user to view the left-eye image only with the left eye, as shown in FIG. 23B. When a right-eye image is displayed on the display device 2, the 3D glasses 300 close the left liquid crystal shutter so as to cause the user to view the right-eye image with the right eye, as shown in FIG. 23C.
This results in parallax, and stereoscopic display is realized. 3.3 Structure of 3D glasses 300.

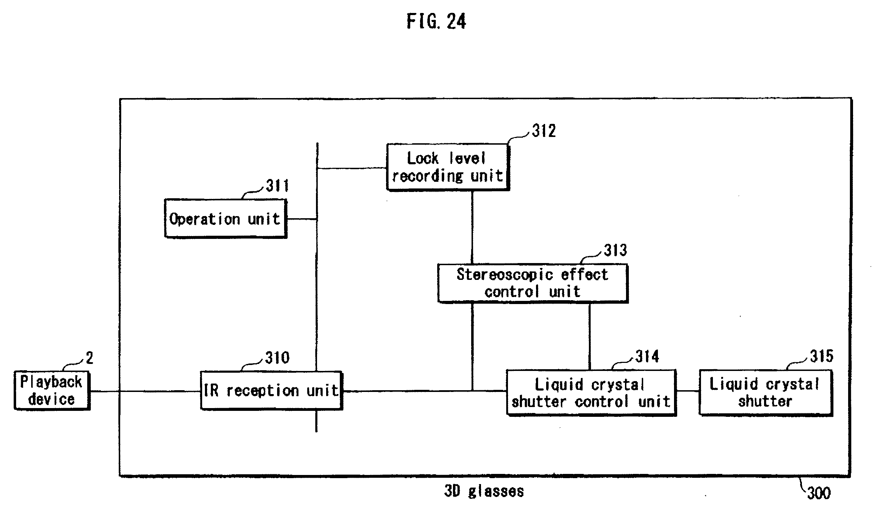

FIG. 24 is a block diagram showing an example of the structure of the 3D glasses 300 relating to the Embodiment 3. As shown in FIG. 24, the 3D glasses 300 include the 1R reception unit 310, an operation unit 311, a lock level recording unit 312, a stereoscopic display effect control unit 313, a liquid crystal shutter control unit 314, and a liquid crystal shutter 315.

The IR reception unit 310 receives a timing signal sent from the IR sending unit 320 of the display device 2 and information of stereoscopic effect level. In the Embodiment 3, stereoscopic effect level to be received is divided into three stages from Level I to Level 3.

The operation unit 311 is used for the user to perform an input operation on the 3D glasses 300. Type of the operation unit 311 is not specifically limited as long as the user can perform a desired input operation.

The lock level recording unit 312 records the lock level that is set or changed by the operation unit 311. By setting the lock level for each pair of 3D glasses, it is possible to perform stereoscopic display effect control different for each user. For example, in the case where family members watch a movie having a stereoscopic display effect, it is possible to limit switching of 2D playback to only a child. In the Embodiment 3, the lock level is divided into three stages from Level 1 to Level 3.

The stereoscopic display effect control unit 313 compares the lock level recorded in the lock level recording unit 312 with the stereoscopic effect level received by the IR reception unit 310, and performs shutter operation control based on a result of the comparison. When the stereoscopic effect level is equal to or higher than the lock level, the stereoscopic display effect control unit 313 switches the playback mode to the 2D playback mode by simultaneously opening and closing the left and right liquid crystal shutters.

The liquid crystal shutter control unit 314 controls the crystal shutter 315 based on the timing signal received by the IR reception unit 310 and the stereoscopic display effect control. When the stereoscopic display effect control is not performed, the left and right shutters are alternately opened and closed. When the stereoscopic display effect control is performed, the left and right shutters are simultaneously opened and closed. As a result, it is possible to switch the playback mode to the 2D playback mode.

### 3.4 Operations of 3D glasses 300

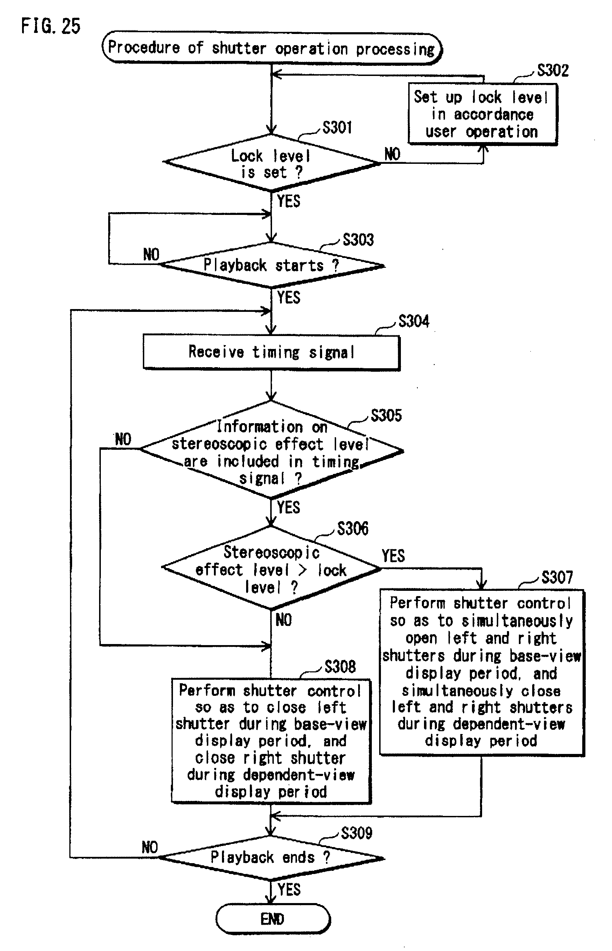

The structural elements of the 3D glasses 300 can be implemented in the playback device by writing a program representing the procedure of the processing shown in the flow chart shown in FIG. 25 in a computer-readable language and causing the processor to execute the program. The following describes implementation of the structural elements of the 3D glasses 300 as software, with reference to the flow chart shown in FIG. 25.

The lock level recording unit 312 judges whether the lock level has been set (Step S301).

When the lock level has not been set (Step S301: No), the lock level recording unit 312 sets the lock level in accordance with user operations (Step S302).

When the lock level has been set (Step S301: Yes), the IR reception unit 310 judges to start playback (Step S303). When it is judged not to start playback (Step S303: No), the 3D glasses 300 are in a processing waiting state until playback starts.

When it is judged to start playback (Step S303: Yes), the IR reception unit 310 receives a timing signal (Step S304).

The stereoscopic display effect control unit 313 judges whether information of stereoscopic effect level has been received together with the timing signal (Step S305).

When judging that the information of stereoscopic effect level has been received together with the timing signal (Step S305: Yes), the stereoscopic display effect control unit 313 judges whether the stereoscopic effect level is higher than the lock level (Step S306).

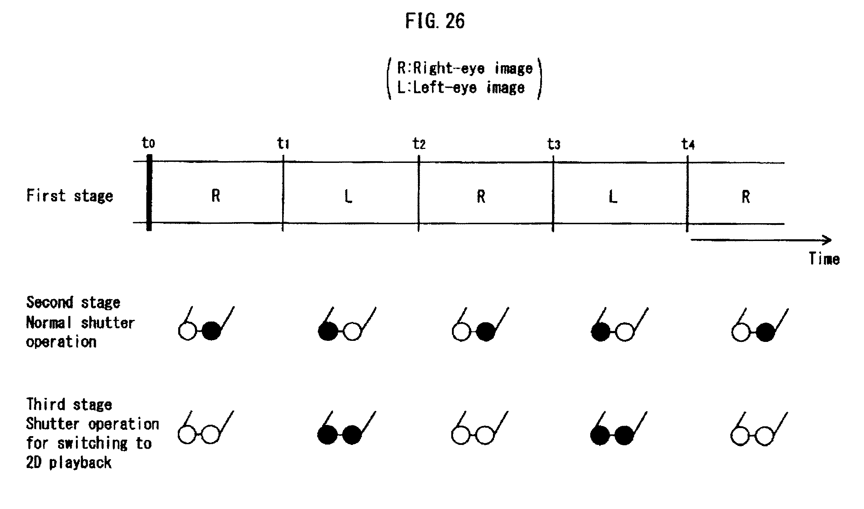

When the stereoscopic effect level is higher than the lock level (Step S306: Yes), the liquid crystal shutter control unit 314 performs shutter operation control so as to simultaneously open the left and right shutters for a base-view display period and simultaneously close the left and right shutters for a dependent-view display period (Step S307). FIG. 26 shows normal shutter operations while a stereoscopic video is played back and shutter operations in the case where the playback mode is switched from 3D playback to 2D playback. In FIG. 26, the first stage shows a timing at which switching between a right-eye image and a left-eye image is performed in the display device 2. The second stage shows normal shutter operations of the 3D glasses 300. In this case, the user views the right-eye image with the right eye and views the left-eye image with the left eye. This results in parallax, and stereoscopic display is realized. The third stage shows shutter operations in the case of switching to 2D playback. In this case, the user views only the right-eye image with both eyes, and this results in 2D playback. In the case where a video having a stereoscopic effect level higher than a level permitted by the user is played back, it is possible to switch the playback mode to the 2D playback mode by simultaneously opening and closing the left and right shutters.

When the information of the stereoscopic effect level has not been received together with the timing signal (Step S305: No), or when the stereoscopic effect level is equal to or lower than the lock level (Step S306: No), the liquid crystal shutter 315 performs shutter operation control so as to close the left shutter for the base-view display period and close the right shutter for the dependent-view display period (Step S308).

The liquid crystal shutter control unit 314 judges whether to end playback (Step S309). When judging not to end the playback (Step S309: No), the IR reception unit 314 performs processing of Step S304.

According to the present embodiment, it is possible to set a lock level different for each user, and as a result to perform stereoscopic display control different for each user.

### (Embodiment 4)

In the Embodiments 1 and 2, the stereoscopic effect level is divided into three stages of Level 1, Level 2, and Level 3. The set stereoscopic level is compared with the lock level having either of Levels 1, 2, and 3. When the stereoscopic effect level is higher than the lock level, stereoscopic display effect control is performed. Compared with the above embodiments, in the Embodiment 4, the stereoscopic effect level is divided into N stages. In accordance with the division of the stereoscopic effect level into N stages, the lock level is also divided into N stages. The following describes stereoscopic effect level determination and lock level setup relating to the Embodiment 4. The structure and operations relating to the Embodiment 4 are the same as those relating to the Embodiment 1 except for division of stereoscopic effect level and lock level, and accordingly the descriptions thereof are omitted here.

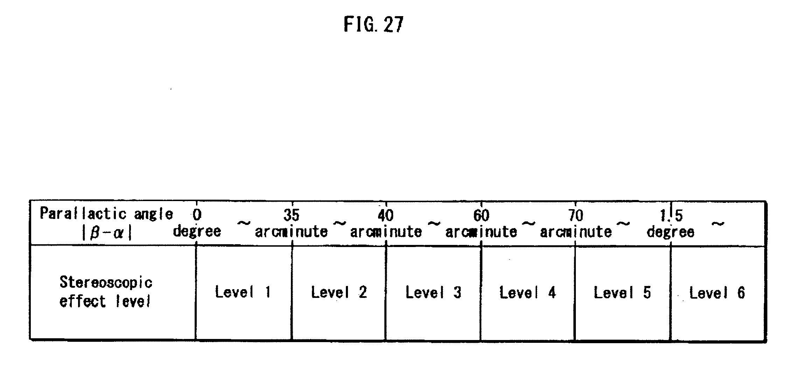

FIG. 27 shows the level conversion standard in the case where stereoscopic effect level is divided into six stages (N=6). As shown in FIG. 27, level determination is performed based on the range of the parallax angle |β-α|.

In the case where the stereoscopic effect level is divided into six stages, the lock level is divided into six stages from Level I to Level 6. When the stereoscopic effect level is higher than the lock level, the stereoscopic display effect control is performed. In this way, precise conversion of stereoscopic effect level enables performance of more precise stereoscopic display effect control.

### (Supplementary Explanation)

Although the present invention has been described based on the above embodiments, the present invention is of course not limited to the above embodiments. The present invention includes the following cases.
(a) In the Embodiments 1, 2, and 3, the stereoscopic effect level is compared with the lock level for each frame, and stereoscopic display effect control is performed based on a result of the comparison. Alternatively, once the playback mode is switched to the 2D playback mode, the 2D playback mode may be maintained for a certain period. In other words, when the stereoscopic effect level becomes higher than the lock level, the 2D playback mode is maintained for a subsequent certain frame period even if the stereoscopic effect level becomes equal to or lower than the lock level. As a result, there does not occur switching between the 2D playback mode and the 3D playback mode for a short period. Accordingly, it is possible to realize playback control for stereoscopic display that is more natural to users.
(b) In the Embodiments 1 and 2, when the stereoscopic effect level is higher than the lock level, operations for switching to the 2D playback mode are performed. Alternatively, when the stereoscopic effect level is higher than the lock level, a warning may be displayed for interrupting playback of a stereoscopic video. Further alternatively, when the stereoscopic effect level is higher than the lock level, a playlist having a suppressed stereoscopic display effect may be played back.
(c) In the Embodiment 1, parallax information detection is performed using a motion vector detected in motion compensation. Alternatively, in the case where an MVC scalable nesting SEI message is stored in a video access unit at the beginning of a GOP constituting dependent view and offset information for the I plane + Offset mode is stored in the MVC scalable nesting SEI message, this offset information may be used as the parallax information. The 1 plane + Offset mode is a playback mode in which a parallax formed by left and right pixels in the pixel coordinate on one plane memory to realize stereoscopic display without using a pair of a right-eye image and a left-eye image. Since the offset information includes an amount of change in the horizontal direction in the I plane + Offset mode, determination of stereoscopic effect level can be performed by using the parallax information.

Alternatively, it may be possible to incorporate, into the view video data, the parallax information detected in Step S 104 and the stereoscopic effect level determined in Step S 105 in the Embodiment 1. Then, it may be possible to write, into the recording medium, the view video data into which the parallax information and the stereoscopic effect level have been incorporated. This view video data is written in the following manner.

The dependent view is composed of a plurality of video access units that each store a view component constituting a GOP (Group Of Pictures). Among the plurality of video access units constituting the GOP, a video access unit that stores therein a view component at the beginning of the GOP includes an MVC scalable nesting SEI message. This MVC scalable nesting SEI message includes a user data container, in which parallax information and a stereoscopic effect level for each view component constituting the GOP are stored. With such a structure, parallax information and a stereoscopic effect level for each view component are incorporated into the dependent view. In other words, the following processing means incorporation of parallax information and a stereoscopic effect level into view video data: parallax information and a stereoscopic effect level for each view component constituting a GOP are incorporated into an MVC scalable nesting SEI message of an access unit at the beginning of the GOP, and the view video data is written back into the recording medium.
(d) In the Embodiment 2, switching to 2D playback is performed by displaying only pictures that constitute a base-view component. Alternatively, switching to 2D playback may be performed by changing shutter operations of 3D glasses. Specifically, switching to 2D playback may be realized by generating a timing signal for controlling so as to simultaneously open left and right shutters for a base-view display period and simultaneously close the left and right shutters for a dependent-view display period.
(e) It is desirable to constitute, using an integrated circuit (system LSI), some of the compositional elements each mainly including a logic device among the compositional elements of the playback device, such as the decoder 116, the register set 118, and the control unit 122.

The system LSI is a high-density substrate on which bare-chip has been mounted and packaging has been performed. The system LSIs include a system LSI that is generated by mounting a plurality of bare-chips on a high-density substrate and performing packaging such that as if the plurality of bare-chips had an external structure of a single LSI (such a system LSI is called a "multi-chip module").

The system LSI has a QFP (Quad Planar view Package) type and a PGA (Pin Grid Array) type. In the QFP-type system LSI, pins are attached to the four sides of the package. In the QFP-type system LSI, pins are attached to the four sides of the package. In the PGA-type system LSI, a lot of pins are attached to the entire bottom.

These pins function as an interface with other circuits. The system LSI, which is connected with other circuits through such pins as an interface, plays a role as the core of the playback device 200.

Such a system LSI can be embedded into various types of devices that can play back images, such as a television, game machine, personal computer, one-segment mobile phone, as well as into the playback device 200. The system LSI thus greatly broadens the use of the present invention.

The following describes a detailed production procedure. Firstly, a circuit diagram of a part to be the system LSI is drawn, based on the drawings that show structures of the embodiments. And then, the constituent elements of the target structure are realized using circuit elements, ICs, or LSis,

As the constituent elements are realized, buses connecting between the circuit elements, ICs, or LSIs, peripheral circuits, interfaces with external entities and the like are defined. Further, the connection lines, power lines, ground lines, clock signals, and the like are defined. For these definitions, the operation timings of the constituent elements are adjusted by taking into consideration the LSI specifications, and bandwidths necessary for the constituent elements are reserved. With other necessary adjustments, the circuit diagram is completed.

After the circuit diagram is completed, the implementation design is performed. The implementation design is a work for creating a board layout by determining how to arrange the parts (circuit elements, ICs, or LSis) of the circuit and the connection lines onto the board.

After the implementation design is performed and the board layout is created, the results of the implementation design are converted into CAM data, and the CAM data is output to equipment such as an NC machine tool. The NC machine tool performs the SoC implementation or the SiP implementation based on the CAM data. The SoC (System on Chip) implementation is a technology for printing a plurality of circuits onto a chip. The SiP (System in Package) implementation is a technology for packaging a plurality of circuits by resin or the like. Through these processes, a system LSI of the present invention can be produced based on the internal structure of the playback device 200 described in the above embodiments.

It should be noted here that the integrated circuit generated as described above may be called 1C, LSI, ultra LSI, super LSI, or the like, depending on the level of the integration.

It is also possible to achieve the system LSI by using the FPGA. In this case, a lot of logic elements are to be arranged lattice-like, and vertical and horizontal wires are connected based on the input/output compositions described in LUT (Look-Up Table), so that the hardware structure described in each of the embodiments can be realized. The LUT is stored in the SRAM. Since the contents of the SRAM are erased when the power is off, when the FPGA is used, it is necessary to define the Config information so as to write, onto the SRAM, the LUT for realizing the hardware structure described in each of the embodiments.

In the above embodiments, the invention is realized by middleware and hardware corresponding to the system LSI, hardware other than the system LSI, an interface portion corresponding to the middleware, an interface portion to intermediate between the middleware and the system LSI, an interface portion to intermediate between the middleware and the necessary hardware other than the system LSI, and a user interface portion, and when integrating these elements to form the playback device, particular functions are provided by operating the respective elements in tandem.

### [Industrial Applicability]

The stereoscopic display control device relating to the present invention converts a stereoscopic display effect given to a 3D image into a level, and switches whether to restrict the stereoscopic display effect based on the converted level. Accordingly, the stereoscopic display control device is useful in limiting viewing of a 3D image having a strong pop-out effect to adult viewers.

### [Reference Signs List]

1: playback device
2: display device
3: 3D glasses
10: stream file
11: base-view video stream
12: dependent-view video stream
13: audio stream
14: transport stream
15: stream information file
16: 2D stream information file
17: 3D stream information file
18: clip base information
19: clip dependent information
20: entry map
21: playlist information file
22: mainpath information
23: subpath information
110: reading unit
111: optical disc drive
112: card reader/writer
113: hard disk drive
114: setup unit
115: OSD generation unit
116: decoder
117: parallax information detection unit
118: register set
119: player status register
120: player setting register
121: lock level register
122: control unit
123: plane memory
124: transmission unit
200: display device
210: playback device
211: HDMI reception unit
212: operation unit
214: signal processing unit
215: parallax information detection unit
216: lock level recording unit
217: stereoscopic display effect control unit
218: video panel driving unit
219: video panel
220: timing signal generator
221: IR sending unit
300: 3D glasses
310: IR reception unit
311: operation unit
312: lock level recording unit
313: stereoscopic display effect control unit
314: liquid crystal shutter control unit
315: liquid crystal shutter
320: IR sending unit

## Claims

1. A stereoscopic control device that acquires a pair of main-view data and sub-view data and outputs the acquired pair to another device so as to cause a viewer to view a stereoscopic image, the stereoscopic control device comprising:
a detection unit operable to detect parallax information that indicates a distance between a pixel of the main-view data and a pixel of the sub-view data;
a reception unit operable to receive, from a user, an operation of setting and/or changing a lock level that indicates a permissible degree of pop-out of the stereoscopic image set by the user;
an authentication unit operable to, when the reception unit receives the operation from the user, perform authentication on the user;
a holding unit operable to, when the authentication unit succeeds in the authentication, hold therein the set or changed lock level; and
a control unit operable to (i) compare the lock level with a stereoscopic effect level that indicates a degree of a stereoscopic effect produced by the parallax information, and (ii) when a result of the comparison shows that the stereoscopic effect level is higher than the lock level, restrict the stereoscopic effect.

2. The stereoscopic control device of Claim 1, wherein
the parallax information indicates the number of pixels that form a distance Δa,
the stereoscopic effect is based on a parallax angle |β-α| formed by a convergence angle α on a display surface and a convergence angle β at an image forming point, and
Δa = 2×h×(tanβ/2-tanα/2) is satisfied, with h denoting a distance between the display surface and the viewer.

3. The stereoscopic control device of Claim 1, further comprising
a conversion unit operable to convert, using at least one threshold value, the distance Δa indicated by the detected parallax information into one of a plurality of stereoscopic effect levels, and
the stereoscopic effect level compared with the lock level is obtained by the conversion performed by the conversion unit.

4. The stereoscopic control device of Claim 1, further comprising
a decoder operable to perform motion compensation based on a correlation between the main-view data and the sub-view data, wherein
the parallax information is detected by calculating a horizontal component of a motion vector acquired in the motion compensation.

5. The stereoscopic control device of Claim 1, wherein
the parallax information is detected by (i) judging whether a particular line pixel extracted from the main-view data is identical with a particular line pixel extracted from the sub-view data, and (ii) counting the number of pixels that are positioned between the main-view data and the sub-view data with respect to the identical particular line pixels.

6. The stereoscopic control device of Claim 5, wherein
a screen on which the main-view data and the sub-view data are displayed is divided into a plurality of areas, and
the particular line pixel is extracted from each of the divided areas on the screen.

7. The stereoscopic control device of Claim 1, wherein
the lock level is set for each pair of glasses having a shutter control function that is worn by the viewer for viewing the stereoscopic image, and
when the stereoscopic effect level is higher than the lock level, the control unit restricts the stereoscopic effect by controlling the glasses to perform shutter control based on the lock level.

8. The stereoscopic control device of Claim 7, wherein
the glasses perform the shutter control by causing the viewer to view one of a right-eye image and a left-eye image with both left and right eyes during a frame period.

9. A recording medium having recorded thereon:
a plurality of pairs that are each composed of main-view data and sub-view data, and constitute a stereoscopic image; and
data that indicates a level of a stereoscopic effect of the stereoscopic image.

10. An integrated circuit that acquires a pair of main-view data and sub-view data and outputs the acquired pair to another device so as to cause a viewer to view a stereoscopic image, the integrated circuit comprising:
a detection unit operable to detect parallax information that indicates a distance between a pixel of the main-view data and a pixel of the sub-view data;
a reception unit operable to receive, from a user, an operation of setting and/or changing a lock level that indicates a permissible degree of pop-out of the stereoscopic image set by the user;
an authentication unit operable to, when the reception unit receives the operation from the user, perform authentication on the user;
a holding unit operable to, when the authentication unit succeeds in the authentication, hold therein the set or changed lock level; and
a control unit operable to (i) compare the lock level with a stereoscopic effect level that indicates a degree of a stereoscopic effect produced by the parallax information, and (ii) when a result of the comparison shows that the stereoscopic effect level is higher than the lock level, restrict the stereoscopic effect.

11. A stereoscopic control method of acquiring a pair of main-view data and sub-view data and outputting the acquired pair to another device so as to cause a viewer to view a stereoscopic image, the stereoscopic control method comprising:
a detecting step of detecting parallax information that indicates a distance between a pixel of the main-view data and a pixel of the sub-view data;
a receiving step of receiving, from a user, an operation of setting and/or changing a lock level that indicates a permissible degree of pop-out of the stereoscopic image set by the user;
an authenticating step of, when the receiving step receives the operation from the user, performing authentication on the user;
a holding step of, when the authenticating step succeeds in the authentication, holding therein the set or changed lock level; and
a controlling step of (i) comparing the lock level with a stereoscopic effect level that indicates a degree of a stereoscopic effect produced by the parallax information, and (ii) when a result of the comparison shows that the stereoscopic effect level is higher than the lock level, restricting the stereoscopic effect.
